(19) Europäisches Patentamt
European Patent Office
Office européen des brevets

(11) **EP 3 602 385 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **18707694.8**

(22) Anmeldetag: **23.02.2018**

(51) Int Cl.:
**G06F 21/64** *(2013.01)*  **H04L 9/32** *(2006.01)*

(86) Internationale Anmeldenummer:
**PCT/EP2018/054557**

(87) Internationale Veröffentlichungsnummer:
**WO 2018/177662 (04.10.2018 Gazette 2018/40)**

(54) **HASHWERTE FÜR DIE BIDIREKTIONALE VERKETTETE BLOCKCHAIN**

HASH VALUES FOR THE BIDIRECCTIONALLY LINKED BLOCKCHAIN

VALEURS DE HACHAGE POUR CHAÎNE DE BLOCS BIDIRECTIONNELLE CONCATÉNÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2017 DE 102017205163**

(43) Veröffentlichungstag der Anmeldung:
**05.02.2020 Patentblatt 2020/06**

(73) Patentinhaber: **Bundesdruckerei GmbH**
**10969 Berlin (DE)**

(72) Erfinder:
- **WILKE, Andreas**
  **13509 Berlin (DE)**
- **FABIAN, David**
  **13465 Berlin (DE)**
- **KOMAROV, Ilya**
  **13507 Berlin (DE)**
- **PAESCHKE, Manfred**
  **16348 Wandlitz (DE)**

(74) Vertreter: **Richardt Patentanwälte PartG mbB**
**Wilhelmstraße 7**
**65185 Wiesbaden (DE)**

(56) Entgegenhaltungen:
**WO-A1-2016/161073     US-A1- 2016 261 690**

- **JUAN GARAY ET AL: "The Bitcoin Backbone Protocol: Analysis and Applications", INTERNATIONAL ASSOCIATION FOR CRYPTOLOGIC RESEARCH,, Bd. 20160127:132350, 27. Januar 2016 (2016-01-27), Seiten 1-37, XP061019626, [gefunden am 2016-01-27]**

**Beschreibung**

Die Erfindung betrifft ein Verfahren und ein elektronisches Datenspeichersystem zum Speichern von Daten. Insbesondere betrifft die Erfindung ein Verfahren und ein elektronisches Datenspeichersystem zum manipulationssicheren Speichern von Daten in einer bidirektional verketteten Blockchain-Struktur.

Die Möglichkeit einer Veränderung oder gar gezielten Manipulation von digital codierten Daten in elektronischen Speichern stellt eine technische Herausforderung dar.

Aus dem Stand der Technik sind Blockchain-Strukturen, d. h. Blockketten-Strukturen, zur Sicherung von Daten bekannt. Bei diesen Blockchain-Strukturen handelt es sich um unidirektional verketteten Blockchain-Strukturen. Beispielsweise werden entsprechende Blockchain-Strukturen verwendet, um Transaktionen von Kryptowährungen, wie etwa dem Bitcoin-Zahlungssystem, zu protokollieren.

Eine Blockchain-Struktur stellt dabei eine erweiterbare Liste von Datensätzen bereit, welche in Blöcken angeordnet sind. Die Integrität der einzelnen Blöcke wird im Stand der Technik durch eine unidirektionale Verkettung unter Verwendung kryptografischer Prüfwerte der einzelnen Blöcke in Form von Hashwerten gesichert. Dadurch, dass jeder Block einen kryptografischen Prüfwert des vorangehenden Blocks inklusive des in dem vorangehenden Block gespeicherten kryptografischen Prüfwerts umfasst, ergibt sich eine Verkettung der Blöcke. Dabei umfasst jeder Block einen Prüfwert, welcher auf den Inhalten aller vorangehenden Blöcke beruht. Somit ist es schwer, eine solche Blockchain nachträglich zu manipulieren. Hierzu müsste nicht nur ein einzelner Block manipuliert werden, sondern alle nachfolgenden Blöcke, da der Prüfwert jedes nachfolgenden Blocks unter anderem auf dem zu manipulierenden Block beruht. Wird der zu manipulierende Block tatsächlich manipuliert, so ändert sich sein Prüfwert. Dieser geänderte Prüfwert passt nicht mehr zu den Prüfwerten der nachfolgenden Blöcke, wodurch die Manipulation erkennbar wird und bei einer Prüfung mittels der Prüfwerte auffällt.

Bekannte Blockchain-Strukturen implementieren allerdings lediglich eine unidirektionale Verkettung und damit Absicherung der Daten, da bei der Verkettung jeweils nur Dateninhalte vorangehender Blöcke berücksichtigt werden. So lässt sich anhand der Verkettung prüfen, ob ein vorangehender Block einer vorgelegten Blockchain-Struktur manipuliert wurde. Es lässt sich jedoch nicht prüfen, ob die vorgelegten Blockchain-Struktur vollständig ist. Insbesondere lässt sich nicht prüfen, ob möglicherweise ein Teil der Blockchain-Struktur abgeschnitten wurde. Ferner lässt sich nicht prüfen, ob der letzte Block manipuliert wurde.

Bei der Prüfung und Absicherung von Blockchain-Struktur kommen ferner gängige Hashverfahren zum Einsatz. Einzelne Blöcke der Blockchain-Struktur werden über Hashwerte unidirektional miteinander verknüpft. Damit man eine solche Blockchain-Struktur mit unidirektional miteinander verknüpften Blöcken auf Manipulation prüfen kann, benötigt man sowohl sämtliche Informationen der einzelnen Blöcke als auch ihren jeweiligen Hashwert. Des Weiteren macht es eine Prüfung einer solchen Blockchain-Struktur erforderlich mit dem ersten Block der entsprechenden Blockchain-Struktur zu beginnen und mit dem letzten Block aufhören.

Die WO 2016/161073 A1 beschreibt ein Computersystem, welches mit einem verteilten Blockchain-System mit einer Mehrzahl von Knoten kommuniziert. Eine Börse speichert ein Auftragsbuch und eine Mehrzahl von digitalen Geldbörsen, welche verschiedenen Kunden zugeordnet sind. Das Computersystem empfängt neue Datentransaktionsanforderungen, die dem Auftragsbuch hinzugefügt werden. Es wird eine Übereinstimmung zwischen Datentransaktionsanforderungen und HashWerten identifiziert, die den digitalen Geldbörsen zugeordnet sind. Die Gegenparteien erhalten die Hash-Werte der anderen Partei zusammen mit Informationen über die Übereinstimmung, und jede Partei veranlasst, dass Blockchain-Transaktionen zur Blockchain des Blockchain-Systems hinzugefügt werden. Das System überwacht dann die Blockchain, um festzustellen, ob beide Seiten der Übereinstimmung zur Blockchain hinzugefügt wurden.

Die US 2016/261690 A1 beschreibt Systeme und Verfahren, welche die Übermittlung von Nachrichten an eine skalierbare Anzahl von Vorrichtungen unabhängig von einer zentralen Ressource ermöglichen. Eine Computer oder eine Anzahl von Computern empfangen von einer Verwaltungseinheit eine oder mehrere Nachrichten über eine Blockchain, die von mehreren dezentralen Knoten in einem Peer-to-Peer-Netzwerk verwaltet wird. Der oder die Computer führen die in der Nachricht identifizierten Anweisungen aus und geben gegebenenfalls Ergebnisse zurück.

Der Artikel "The Bitcoin Backbone Protocol: Analysis and Applications" von Juan Graray et al., Advances in Cryptology - EUROCRYPT 2015, 26. April 2015, beschreibt das Bitcoin-Protokoll und dessen grundlegenden Funktionen, welche als Bitcoin-Backbone bezeichnet werden.

Der Erfindung liegt die Aufgabe zugrunde, ein verbessertes Verfahren zum manipulationssicheren Speichern von Daten zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum manipulationssicheren Speichern von Daten in einem elektronischen Speicher unter Verwendung einer bidirektional verketteten Blockchain-Struktur, welche zumindest einen ersten und einen letzten Block umfasst. Das Verfahren umfasst:

- Bereitstellen einer bidirektional verketteten Blockchain-Struktur,
- Bereitstellen der zu speichernden Daten,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Berechnen eines ersten Prüfwerts des letzten Blocks zum bidirektional Verketten des zusätzlichen Blocks mit dem letzten Block der Blockchain-Struktur, wobei der erste Prüfwert des letzten Blocks unter Verwendung eines ersten Hashwerts berechnet wird, dessen Berechnung ein Anwenden einer Hashfunktion auf die in dem letzten Block gespeicherten Daten und die in dem zusätzlichen Block zu speichernden Daten umfasst,
- Berechnen eines Prüfwerts des zusätzlichen Blocks zum bidirektional Verketten des zusätzlichen Blocks mit dem letzten Block der Blockchain-Struktur, wobei der Prüfwert des zusätzlichen Blocks unter Verwendung eines zweiten Hashwerts berechnet wird, dessen Berechnung ein Anwenden der Hashfunktion auf die in dem letzten Block gespeicherten Daten und die auf die in dem zusätzlichen Block zu speichernden Daten umfasst,
- Hinzufügen des ersten Prüfwerts des letzten Blocks zu dem letzten Block,
- Hinzufügen des Prüfwerts des zusätzlichen Blocks zu dem zusätzlichen Block,
- Speichern der um den zusätzlichen Block erweiterten Blockchain-Struktur.

Ausführungsformen können den Vorteil haben, dass sie es ermöglichen eine Blockchain bereitzustellen, welche mit Hashverfahren bidirektional verkettet ist. Die Verkettung ermöglicht ferner eine bidirektionale Prüfung der Blockchain-Struktur auf Echtheit bzw. Manipulation. Dabei kann die Blockchain-Struktur nicht nur in einer Richtung, sondern in zwei Richtung geprüft werden. Ferner kann eine erhöhte Sicherheit durch komplexere und sichere Hashverfahren implementiert werden.

Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfwerts, wie etwa eines Hashwertes, des vorangehenden Datensatzes in dem jeweils nachfolgenden Datensatz gesichert ist. Der Prüfwert ist dabei dem Inhalt des vorangehenden Datensatzes zugeordnet und charakterisiert diesen eindeutig. Wird der Inhalt des vorangehenden Datensatzes verändert, so erfüllt dieser nicht mehr den zugeordneten Prüfwert, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Die Sicherheit der Blockchain-Struktur kann beispielsweise dadurch erhöht werden, dass sie veröffentlicht wird bzw. allgemein zugänglich ist und somit ein Vergleich einer vorliegenden Kopie der Blockchain-Struktur mit weiteren veröffentlichten bzw. zugänglichen Kopien derselben Blockchain-Struktur ermöglicht wird.

Ein Prüfwert für Daten ist ein den entsprechenden Daten zugeordneter Wert, welcher die Daten derart eindeutig charakterisiert, dass die Integrität der Daten anhand des Prüfwerts überprüft werden kann. Ein Prüfwert in Form einer Prüfsumme stellt beispielsweise einen Wert bereit, welcher aus den Ausgangsdaten berechnet wurde und dazu konfiguriert ist, zumindest einen Bitfehler in den Daten zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von Datenwerten, einer Berechnung einer Quersumme, eines Paritätsbit, eines gewichteten Mittelwerts der Daten oder auf komplexeren Berechnungsverfahren beruhen, wie etwa einer zyklischen Redundanzprüfung oder der Verwendung einer Hashfunktion. Nach Ausführungsformen umfassen die Prüfwerte jeweils einen mittels einer Hashfunktion aus den entsprechenden Daten berechneten Hash-Wert.

Im Falle einer unidirektional verketteten Blockchain-Struktur wird ein Prüfwert unter Verwendung eines Blocks der Blockchain-Struktur berechnet und zu einem mit diesem Block unidirektional zu verkettenden zusätzlichen Block hinzugefügt. Anhand des Prüfwerts des hinzugefügten Blocks kann die Integrität des Blocks bzw. der Daten des entsprechenden Blocks geprüft werden, mit welchem der hinzugefügte Block unidirektional verkettet ist. Hierzu wird beispielsweise unter Verwendung der Daten des entsprechenden Blocks der Prüfwert nachgerechnet und mit dem von dem hinzugefügten Block bereitgestellten Prüfwert verglichen. Stimmen beide Prüfwerte überein, ist die Integrität des Blocks bzw. der Daten des entsprechenden Blocks gewahrt, mit welchem der hinzugefügte Block unidirektional verkettet ist.

Im Falle der bidirektional verketteten Blockchain-Struktur gemäß Ausführungsformen, wird ein Prüfwert nicht nur unter Verwendung von Daten des letzten Blocks der Blockchain-Struktur, sondern auch unter Verwendung von Daten des mit diesem Block bidirektional zu verkettenden zusätzlichen Blocks berechnet. Anhand eines solchen Prüfwerts des hinzugefügten Blocks kann die Integrität des Blocks bzw. der Daten des entsprechenden Blocks, mit welchem der hinzugefügte Block bidirektional verkettet ist, in Abhängigkeit von den Daten des hinzugefügten Blocks geprüft werden. Hierzu wird beispielsweise unter Verwendung der Daten des entsprechenden Blocks und der Daten des hinzugefügten Blocks der Prüfwert nachgerechnet und mit dem von dem hinzugefügten Block bereitgestellten Prüfwert verglichen. Stimmen beide Prüfwerte überein, ist die Integrität des Blocks bzw. der Daten des entsprechenden Blocks, mit welchem der hinzugefügte Block bidirektional verkettet ist, ebenso wie die Integrität des zusätzlichen Blocks bzw. der Daten des zusätzlichen Blocks gewahrt.

Wird ein Prüfwert der bidirektionalen Verkettung sowohl zu dem hinzugefügten zusätzlichen Block hinzugefügt als auch zu dem Block, mit welchem der hinzugefügte zusätzliche Block bidirektional verkettet wird, so kann eine Integritätsprüfung ferner auf Basis des zu dem entsprechenden Block hinzugefügten Prüfwerts erfolgen.

Anhand eines Prüfwerts des letzten Blocks, mit welchem der hinzugefügte Block bidirektional verkettet ist, kann im Gegensatz zu bekannten unidirektional verketteten Blockchain-Strukturen auch erkannt werden, ob die Blockchain-Struktur abgeschnitten wurde. Da die Prüfwerte im Fall bekannter unidirektional verketteter Blockchain-Strukturen jeweils nur Informationen über vorangehende Blöcke umfassen, kann auf Basis eines solchen Prüfwerts nicht erkannt werden, ob nachfolgende Blöcke existieren. Somit kann auch nicht erkannt werden, wenn nachfolgende Blöcke im Zuge einer Manipulation verändert, ersetzt oder entfernt werden. Demgegenüber umfassen die Prüfwerte der bidirektionalen Verkettung gemäß Ausführungsformen, jeweils Informationen über beide miteinander verkettete Blöcke. Ferner wird zu jedem der beiden entsprechenden Blöcke jeweils ein solcher Prüfwert hinzugefügt. Wird der hinzugefügte Block im Zuge einer Manipulation verändert, ersetzt oder entfernt, so kann dies anhand des Prüfwerts des Blocks, mit welchem der hinzugefügte Block bidirektional verkettet ist, erkannt werden.

Nach Ausführungsformen umfasst der letzte Block der Blockchain-Struktur einen zweiten Prüfwert des letzten Blocks, welcher den letzten Block bidirektional mit einem vorletzten Block der Blockchain-Struktur verkettet, wobei der zweite Prüfwert des letzten Blocks unter Verwendung eines dritten Hashwerts berechnet wurde, dessen Berechnung ein Anwenden der Hashfunktion auf in dem vorletzten Block gespeicherte Daten und die in dem letzten Block gespeicherten Daten umfasst.

Ausführungsformen können den Vorteil haben, dass der letzte Block der Blockchain-Struktur, welcher durch das Erweitern der Blockchain-Struktur um den zusätzlichen Block zum vorletzten Block der resultierenden erweiterten Blockchain-Struktur wird, sowohl einen ersten Prüfwert umfasst, welcher den letzten Block bidirektional mit dem zusätzlichen Block verkettet, als auch einen zweiten Prüfwert umfasst, welcher den letzten Block bidirektional mit dem vorletzten Block verkettet. Anhand des letzten Blocks der Blockchain-Struktur bzw. des vorletzten Blocks der resultierenden erweiterten Blockchain-Struktur kann somit nicht nur die Integrität des nachfolgenden, sondern auch der vorangehenden Blocks geprüft werden.

Nach Ausführungsformen umfassen die Blöcke der resultierenden Blockchain-Struktur somit abgesehen von dem ersten und letzten Block jeweils zumindest zwei Prüfwerte: Einen Prüfwert, welcher eine bidirektionale Verknüpfung zu dem unmittelbar vorangehenden Block etabliert, und einen Prüfwert, welcher eine bidirektionale Verknüpfung zu dem unmittelbar nachfolgenden Block etabliert. Nach Ausführungsformen können die beiden Prüfwerte durch Anwenden einer Hashfunktion auf eine Verknüpfung der beiden Prüfwerte miteinander kombiniert werden. Bei der Verknüpfung kann es sich beispielsweise um eine arithmetische Verknüpfung, wie Addition, Subtraktion, Multiplikation und/oder Division handeln.

Nach Ausführungsformen umfasst das Verfahren ferner:

- Berechnen eines kombinierten Prüfwerts des letzten Blocks, wobei der kombinierte Prüfwert des letzten Blocks unter Verwendung eines vierten Hashwerts berechnet wird, dessen Berechnung ein Anwenden der Hashfunktion auf eine Kombination aus dem ersten und dem zweiten Prüfwert des letzten Blocks umfasst,
- Hinzufügen des kombinierten Prüfwerts des letzten Blocks zu dem letzten Block der Blockchain-Struktur.

Ausführungsformen können den Vorteil haben, dass der kombinierte Prüfwert auf den Daten des vorletzten Blocks der Blockchain-Struktur, des letzten Blocks der Blockchain-Struktur und des zusätzlichen Blocks basiert. Anhand des kombinierten Prüfwerts können somit zugleich der vorangehende als auch der nachfolgende Block auf ihre Integrität geprüft werden.

Nach Ausführungsformen wird der kombinierte Prüfwert $KPW_N$ des letzten Blocks wie folgt berechnet:

$$KPW_N = Hash\{PW_{N-1} + PW_N\},$$

wobei $PW_{N-1}$ den zweiten Prüfwert des letzten Blocks und $PW_N$ den ersten Prüfwert des letzten Blocks bezeichnet. Nach einer alternativen Notation wird der kombinierte Prüfwert $KPW_N$ des letzten Blocks wie folgt berechnet:

$$KPW_N = Hash\{PW2_{N-1} + PW1_N\},$$

wobei $PW2_{N-1}$ den zweiten Prüfwert des letzten Blocks und $PW1_N$ den ersten Prüfwert des letzten Blocks bezeichnet.

Ausführungsformen können den Vorteil haben, dass ein effizientes und sicheres Verfahren zum Berechnen des kombinierten Prüfwerts $KPW_N$ des letzten Blocks, d.h. des N-ten Blocks der Blockchain-Struktur bereitgestellt wird.

Nach Ausführungsformen umfasst der letzte Block einen Platzhalter, welcher den letzten Block als letzten Block der Blockchain-Struktur kennzeichnet, wobei das Hinzufügen des ersten Prüfwerts des letzten Blocks zu dem letzten Block umfasst: Ersetzen des Platzhalters des letzten Blocks durch den ersten Prüfwert des letzten Blocks.

Ausführungsformen können den Vorteil haben, dass anhand des Platzhalters stets der letzte Block der Blockchain-Struktur erkannt werden kann. Wird das Ende der Blockchain-Struktur im Zuge einer Manipulation abgeschnitten, so umfasst die resultierende abgeschnittene Blockchain-Struktur keinen Block mehr, welcher durch einen entsprechenden Platzhalter als letzter Block gekennzeichnet ist. Somit kann allein am Fehlen des entsprechenden Platzhalters ohne weiteren Aufwand erkannt werden, dass die entsprechende Blockchain-Struktur nicht vollständig ist. Nach Ausführungsformen umfasst der Platzhalter beispielsweise eine oder mehrere Nullen bzw. besteht ausschließlich aus einer oder mehreren Nullen.

Nach Ausführungsformen umfasst der zusätzliche Block einen Platzhalter, welcher den zusätzlichen Block als letzten Block der erweiterten Blockchain-Struktur kennzeichnet. Ausführungsformen können den Vorteil haben, dass der zusätzliche Block nach Erweiterung der Blockchain-Struktur als letzter Block der erweiterten Blockchain-Struktur erkannt wird. Zugleich kann erkannt werden, dass die erweiterten Blockchain-Struktur vollständig ist und keine eigentlich nachfolgenden Blöcke entfernt wurden.

Nach Ausführungsformen umfasst das Verfahren ferner:

- Berechnen eines kombinierten Prüfwerts des zusätzlichen Blocks, wobei der kombinierte Prüfwert des zusätzlichen Blocks unter Verwendung eines fünften Hashwerts berechnet wird, dessen Berechnung ein Anwenden der Hashfunktion auf eine Kombination aus dem Prüfwert des zusätzlichen Blocks und dem Platzhalter des zusätzlichen Blocks umfasst,
- Hinzufügen des kombinierten Prüfwerts des zusätzlichen Blocks zu dem zusätzlichen Block der Blockchain-Struktur.

Ausführungsformen können den Vorteil haben, dass anhand des kombinierten Prüfwerts geprüft werden kann, ob es sich bei dem zusätzlichen Block tatsächlich um den letzten Block der erweiterten Blockchain-Struktur handelt. Zugleich kann anhand des kombinierten Prüfwerts die Integrität des vorangehenden Blocks geprüft werden.

Nach Ausführungsformen wird der kombinierte Prüfwert $KPW_{N+1}$ des zusätzlichen Blocks wie folgt berechnet:

$$KPW_{N+1} = Hash\{PW_N + PH_{N+1}\},$$

wobei $PW_N$ den Prüfwert des zusätzlichen Blocks und $PH_{N+1}$ den Platzhalter des zusätzlichen Blocks bezeichnet. Nach einer alternativen Notation wird der kombinierte Prüfwert $KPW_{N+1}$ des zusätzlichen Blocks wie folgt berechnet:

$$KPW_{N+1} = Hash\{PW2_N + PH_{N+1}\},$$

wobei $PW2_N$ den Prüfwert des zusätzlichen Blocks und $PH_{N+1}$ den Platzhalter des zusätzlichen Blocks bezeichnet.

Ausführungsformen können den Vorteil haben, dass ein effizientes und sicheres Verfahren zum Berechnen des kombinierten Prüfwerts $KPW_{N+1}$ des zusätzlichen Blocks, d.h. des (N+1)-ten Blocks der erweiterten Blockchain-Struktur, bereitgestellt wird.

Nach Ausführungsformen umfasst der erste Block der Blockchain-Struktur einen Platzhalter, welcher den ersten Block als ersten Block der Blockchain-Struktur kennzeichnet. Ausführungsformen können den Vorteil haben, dass anhand des Platzhalters stets der erste Block der Blockchain-Struktur erkannt werden kann. Wird der Anfang der Blockchain-Struktur im Zuge einer Manipulation abgeschnitten, so umfasst die resultierende abgeschnittene Blockchain-Struktur keinen Block mehr, welcher durch einen entsprechenden Platzhalter als erster Block gekennzeichnet ist. Somit kann allein am Fehlen des entsprechenden Platzhalters ohne weiteren Aufwand erkannt werden, dass die entsprechende Blockchain-Struktur nicht vollständig ist. Nach Ausführungsformen umfasst der Platzhalter beispielsweise eine oder mehrere Nullen bzw. besteht ausschließlich aus einer oder mehreren Nullen.

Nach Ausführungsformen umfasst der erste Block der Blockchain-Struktur einen kombinierten Prüfwert $KPW_1$ des ersten Blocks, welcher wie folgt berechnet wurde:

$$KPW_1 = Hash\{PH_1 + PW_1\},$$

wobei $PH_1$ den Platzhalter des ersten Blocks und $PW_1$ einen Prüfwert des ersten Blocks bezeichnet. Der Prüfwert des ersten Blocks etabliert eine bidirektionale Verknüpfung mit dem zweiten Block der Blockchain-Struktur. Dabei wurde der Prüfwert des ersten Blocks unter Verwendung eines Hashwerts berechnet wird, dessen Berechnung ein Anwenden der Hashfunktion auf die in dem ersten Block gespeicherten Daten und die in dem zweiten Block gespeicherten Daten umfasst. Nach einer alternativen Notation wurde der kombinierte Prüfwert $KPW_1$ des ersten Blocks wie folgt berechnet:

$$KPW_1 = Hash\{PH_1 + PW1_1\},$$

wobei $PH_1$ den Platzhalter des ersten Blocks und $PW1_1$ einen Prüfwert des ersten Blocks bezeichnet.

Ausführungsformen können den Vorteil haben, dass ein effizientes und sicheres Verfahren zum Berechnen des kombinierten Prüfwerts $KPW_1$ des ersten Blocks der Blockchain-Struktur bereitgestellt wird.

Nach Ausführungsformen weisen die Blöcke der Blockchain-Struktur jeweils eine quadratische (MxM)-Matrixstruktur auf, wobei M eine natürliche Zahl größer-gleich zwei ist. Nach Ausführungsformen werden die gespeicherten Daten der Blöcke der Blockchain-Struktur jeweils von Einträgen einer quadratischen Untermatrix der Matrixstruktur des entsprechenden Blocks umfasst.

Ausführungsformen können den Vorteil haben, dass sie eine Strukturierung der Blöcke bereitstellen, welche ein effektives Erkennen der Daten und Prüfwerte und/oder Berechnen der Prüfwerte ermöglicht. Nach Ausführungsformen wird der erste Prüfwert eines entsprechenden Blocks von einem oder mehreren Einträgen bzw. Elementen einer Spalte oder Zeile der quadratische (MxM)-Matrixstruktur umfasst. Nach Ausführungsformen wird der erste Prüfwert von der M-ten Spalte oder Zeile oder von der ersten Spalte oder Zeile der quadratische (MxM)-Matrixstruktur umfasst. Nach Ausführungsformen wird der zweite Prüfwert des entsprechenden Blocks von einem oder mehreren Einträgen bzw. Elementen einer Zeile oder Spalte der quadratische (MxM)-Matrixstruktur umfasst. Nach Ausführungsformen wird der erste Prüfwert von der M-ten Zeile oder Spalte oder von der ersten Zeile oder Spalte der quadratische (MxM)-Matrixstruktur umfasst. Nach Ausführungsformen wird der kombinierte Prüfwert des entsprechenden Blocks von dem Element $a_{MM}$ oder $a_{11}$ der quadratische (MxM)-Matrixstruktur umfasst. Nach Ausführungsformen handelt es sich bei der quadratischen Untermatrix um eine [(M-1)x(M-1)]-Matrix.

Nach Ausführungsformen umfassen das Berechnen des ersten Prüfwerts des letzten Blocks und das Berechnen des Prüfwerts des zusätzlichen Blocks:

- Berechnen einer Kombination aus den in dem letzten Block gespeicherten Daten und den in dem zusätzlichen Block gespeicherten Daten,
- Berechnen eines Hashwerts der Kombination aus den in dem letzten Block gespeicherten Daten und den in dem zusätzlichen Block gespeicherten Daten,
- Aufteilen des Hashwerts der Kombination aus den in dem letzten Block gespeicherten Daten und den in dem zusätzlichen Block gespeicherten Daten, in einen ersten Teil und einen zweiten Teil, wobei der erste Prüfwert des letzten Blocks den ersten Teil umfasst und wobei der Prüfwert des zusätzlichen Blocks den zweiten Teil umfasst.

Ausführungsformen können den Vorteil haben, dass sie ein effektives Verfahren zum Berechnen der beiden Prüfwerte des letzten und des zusätzlichen Blocks bereitstellen. Nach Ausführungsformen sind die beiden resultierenden Prüfwerte des letzten und des zusätzlichen Blocks somit unterschiedlich.

Nach Ausführungsformen umfasst die Kombination aus den in dem letzten Block gespeicherten Daten und den in dem zusätzlichen Block gespeicherten Daten ein Produkt der Untermatrix des letzten Blocks, deren Einträge die in dem letzten Block gespeichert Daten umfassen, und der Untermatrix des vorletzten Blocks, deren Einträge die in dem zusätzlichen Block zu speichernden Daten umfassen. Nach Ausführungsformen werden der erste Prüfwert $PW1_N$ des letzten Blocks und der Prüfwert $PW2_N$ des zusätzlichen Blocks wie folgt berechnet:

$$Hash\{D_N * D_{N+1}\} = PW1_N + PW2_N,$$

wobei $D_N$ die Untermatrix des letzten Blocks bezeichnet, deren Einträge die gespeicherten Daten des letzten Blocks umfassen, und $D_{N+1}$ die Untermatrix des zusätzlichen Blocks bezeichnet, deren Einträge die gespeicherten Daten des zusätzlichen Blocks umfassen.

Ausführungsformen können den Vorteil haben, dass die aus der Matrixmultiplikation $D_N * D_{N+1}$ resultierende eindeutige Matrix als Eingabe für eine Hashfunktion verwendet wird. Durch die mathematische Eindeutigkeit der Matrixmultiplikation kann sichergestellt werden, dass sich eine Manipulation der Daten im letzten Block N oder im zusätzlichen Block N+1 in einer Veränderung des berechneten Hashwertes und damit in dem ersten Prüfwert des letzten Blocks und dem Prüfwert des zusätzlichen Blocks bemerkbar macht.

Nach Ausführungsformen umfasst das Berechnen des zweiten Prüfwerts des letzten Blocks:

- Berechnen einer Kombination aus den in einem vorletzten Block der Blockchain-Struktur gespeicherten Daten und den in dem letzten Block gespeicherten Daten,
- Berechnen eines Hashwerts der Kombination aus den in dem vorletzten Block gespeicherten Daten und den in dem letzten Block gespeicherten Daten,
- Aufteilen des Hashwerts der Kombination aus den in dem vorletzten Block gespeicherten Daten und den in dem letzten Block gespeicherten Daten, in einen ersten Teil und einen zweiten Teil, wobei ein Prüfwert des vorletzten Blocks den ersten Teil umfasst und wobei der zweite Prüfwert des letzten Blocks den zweiten Teil umfasst.

Ausführungsformen können den Vorteil haben, dass der Prüfwert des vorletzten Blocks und der zweite Prüfwert des letzten Blocks analog zu dem ersten Prüfwert des letzten Blocks und dem Prüfwert des zusätzlichen Blocks berechnet werden. Nach Ausführungsformen umfasst die Kombination aus den in dem vorletzten Block gespeicherten Daten und den in dem letzten Block gespeicherten Daten ein Produkt der Untermatrix des vorletzten Blocks, deren Einträge die in dem vorletzten Block gespeichert Daten umfassen, und der Untermatrix des letzten Blocks, deren Einträge die in dem letzten Block zu speichernden Daten umfassen. Nach Ausführungsformen werden der Prüfwert $PW1_{N-1}$ des vorletzten Blocks und der zweite Prüfwert $PW2_{N-1}$ des letzten Blocks wie folgt berechnet:

$$Hash\{D_{N-1} * D_N\} = PW1_{N-1} + PW2_{N-1},$$

wobei $D_{N-1}$ die Untermatrix des vorletzten Blocks bezeichnet, deren Einträge die gespeicherten Daten des vorletzten Blocks umfassen, und $D_N$ die Untermatrix des letzten Blocks bezeichnet, deren Einträge die gespeicherten Daten des letzten Blocks umfassen.

Nach Ausführungsformen sind der erste Prüfwert des letzten Blocks und der Prüfwert des zusätzlichen Blocks identisch. Ausführungsformen können den Vorteil haben, dass die Berechnung der entsprechenden Prüfwerte effizient erfolgen kann und jeder der beiden Prüfwerte für sich genommen eine Prüfung der bidirektionalen Verknüpfung zwischen dem letzten Block und dem zusätzlichen Block ermöglicht.

Nach Ausführungsformen wird der erste Prüfwert $PW_N$ des letzten Blocks wie folgt berechnet:

$$PW_N = Hash\{D_{N+1} + Hash[D_N + PW_{N-1}]\},$$

wobei $D_{N+1}$ die zu speichernden Daten des zusätzlichen Blocks, $D_N$ die gespeicherten Daten des letzten Blocks und $PW_{N-1}$ den zweiten Prüfwert des letzten Blocks bezeichnet.

Nach Ausführungsformen wurde der zweite Prüfwert $PW_{N-1}$ des letzten Blocks wie folgt berechnet:

$$PW_{N-1} = Hash\{D_N + Hash[D_{N-1} + PW_{N-2}]\},$$

wobei $D_N$ die gespeicherten Daten des letzten Blocks, $D_{N-1}$ die gespeicherten Daten des vorletzten Blocks und $PW_{N-2}$ einen Prüfwert des vorletzten Blocks bezeichnet.

Ausführungsformen können den Vorteil haben, dass ausgehend von dem ersten Block der Blockchain mit dem Prüfwert $PW_1$ alle Prüfwerte der nachfolgenden Blöcke berechnet werden können. Beispielsweise wird $PW_1$ wie folgt berechnet wird:

$$PW_1 = Hash\{D_2 + Hash[D_1 + PH_1]\},$$

wobei $D_2$ die gespeicherten Daten des zweiten Blocks, $D_1$ die gespeicherten Daten des ersten Blocks und $PH_1$ den Platzhalter des ersten Blocks bezeichnet, welcher den ersten Block als ersten Block der Blockchain-Struktur kennzeichnet. Die Berechnung kann dabei bei jedem beliebigen Block der Blockchain-Struktur ausgehend von einem Prüfwert des entsprechenden Blocks begonnen werden. Hervorzuheben ist, dass jeder dieser Prüfwerte gemäß den obenstehenden Formeln von den Daten der beiden durch diesen Prüfwert bidirektional miteinander zu verkettenden Blöcke sowie von den Daten aller vorangehender Blöcke abhängt.

Nach Ausführungsformen sind aufeinanderfolgende Blöcke der bidirektional verketteten Blockchain-Struktur jeweils bidirektional miteinander verkettet, wobei jeweils der vorangehende Block zweier aufeinanderfolgender folgende Blöcke einen Prüfwert des vorangehende Blocks umfasst, welcher unter Verwendung von Daten des vorangehenden Blocks und von Daten des nachfolgenden Blocks berechnet wurde, und der nachfolgende Block der aufeinanderfolgender folgenden Blöcke einen Prüfwert des nachfolgenden Blocks umfasst, welcher unter Verwendung von Daten des vorangehenden Blocks und von Daten des nachfolgenden Blocks berechnet wurde.

Nach Ausführungsformen umfassen die zu speichernden Daten Daten, welche kennzeichnend für den Inhalt eines digital codierten Dokuments sind, wobei das Bereitstellen der zu speichernden Daten ein Empfangen der Daten mittels einer Kommunikationsschnittstelle über ein Netzwerk von einem das digital codierte Dokument erstellenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten die Integrität eines digital codierten Dokuments geprüft werden kann. Für ein vorliegendes digital codiertes Dokument können Daten, welche kennzeichnend für den Inhalt dieses Dokuments sind, berechnet werden. Beispielsweise kann ein Hashwert des Inhalts des digital codierten Dokuments berechnet werden. Diese Daten können mit der Blockchain-Struktur verglichen werden: Umfasst die Blockchain-Struktur die entsprechenden Daten, wird die Integrität des digitalen codierten Dokuments bestätigt und dieses als authentisch anerkannt. Umfasst die Blockchain-Struktur die entsprechenden Daten nicht, wird die Integrität des digital codierten Dokuments verneint. Die Blockchain-Struktur kann hierbei den Vorteil bieten, dass deren Größe kompakt gehalten werden kann, wenn diese nur Hashwerte der digital codierten Dokumente umfasst. Ferner können anhand der Hashwerte der digital codierten Dokumente keine Rückschlüsse auf die Inhalte der entsprechenden Dokumente gezogen werden, wodurch die Sicherheit erhöht wird. Schließlich kann eine aktuelle Version der Blockchain-Struktur beispielsweise auf ein tragbares mobiles Telekommunikationsgerät über das Netzwerk heruntergeladen und anschließend zur Prüfung von digital codierten Dokumenten selbst dann genutzt werden, wenn die Netzwerkverbindung unterbrochen wird, d.h. sich das tragbare mobile Telekommunikationsgerät in einem Offline-Modus befindet.

Unter einem "Dokument" wird insbesondere eine Nachrichtenmeldung, ein Text, eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln. Eine Urkunde ist eine Erklärung in Text- oder Schriftform, welche einen bestimmten Tatbestand bzw. Sachverhalt fixiert. Zudem kann die Urkunde den Austeller der Urkunde identifizieren.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein.

Bei einem digital codierten Dokument kann es sich um beispielsweise um ein Dokument handeln, welches durch Digitalisieren eines Dokuments mit physischen Dokumentenkörper, d.h. eine Umwandlung der von dem physischen Dokumentenkörper umfassten Daten in einen Binärcode, in Dateiform angelegt oder überführt wurde. Insbesondere ist die Gültigkeit eines solchen Dokuments unabhängig von dem Vorhandensein eines fest zugeordneten Dokumentenkörpers.

Nach Ausführungsformen wird kann ein digital codiertes Dokument beispielsweise erstellt werden, indem eine Datei mit den Daten des entsprechenden Dokuments an einem Computer erzeugt wird. Ferner kann ein virtuelles Dokument beispielsweise auch durch Einscannen oder Ablichten eines physischen Dokumentenkörpers, wie etwa einem Dokument auf Papier, erstellt werden.

Nach Ausführungsformen umfassen die zu speichernden Daten Daten einer Transaktion, wobei das Bereitstellen der zu speichernden Daten ein Empfangen der Daten mittels einer Kommunikationsschnittstelle über ein Netzwerk von einem an der Ausführung der Transaktion beteiligten Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten Transaktionen protokolliert werden können. Bei den Transaktionen kann es sich beispielsweise um Transaktionen einer Kryptowährung einer klassischen Währung, einen Verkauf, einen Versand, eine Eigentumsübertragung oder eine Übergabe eines Gegenstands und/oder eines digital codierten Dokuments handeln.

Nach Ausführungsformen die zu speichernden Daten Zustandsdaten einer Vorrichtung, wobei das Bereitstellen der zu speichernden Daten ein Empfangen der Daten mittels einer Kommunikationsschnittstelle über ein Netzwerk von einem die Zustandsdaten mittels eines Sensors erfassenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Zustandsdaten der Zustand und/oder die Zustandshistorie einer Vorrichtung protokolliert werden kann. Bei einer solchen Vorrichtung kann es sich beispielsweise um eine Produktionsvorrichtung, eine Komponente eines Computersystems, eine Schließanlage, eine Zugangskontrollvorrichtung oder ein Fahrzeug handeln. Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten bzw. in Folge einer Benutzung durch einen Nutzer wiedergeben.

Die Zustandsdaten können nach Ausführungsformen auch Daten über von der Vorrichtung ausgeführte Funktionen umfassen. Beispielsweise können so von einer Produktionsvorrichtung ausgeführte Fertigungs- und/oder Bearbeitungsvorgänge protokolliert werden. Ferner können beispielsweise Aktionen einer Zugangskontrollvorrichtung protokolliert werde, wobei die protokollierten Daten Informationen darüber umfassen können, wann wer über die Zugangskontrollvorrichtung Zugang zu einem gesicherten Bereich erhalten hat.

Nach Ausführungsformen umfassen die zu speichernden Daten Daten, welche einen Bearbeitungsvorgang eines digital codierten Dokuments kennzeichnen, wobei das Bereitstellen der Blockchain-Struktur ein Empfangen des zu bearbeitenden Dokuments, welches die Blockchain-Struktur umfasst, und ein Auslesen der Blockchain-Struktur aus dem empfangenen Dokument umfasst, wobei das Bereitstellen der zu speichernden Daten ein Bearbeiten des empfangenen Dokuments und ein Erzeugen der Daten umfasst, wobei das Speichern der erweiterten Blockchain-Struktur ein Hinzufügen der erweiterten Blockchain-Struktur zu dem bearbeiteten Dokument und ein Speichern des bearbeiteten Dokuments mit der erweiterten Blockchain-Struktur umfasst.

Ausführungsformen können den Vorteil haben, dass anhand der in der Blockchain-Struktur eingetragenen Daten Bearbeitungsvorgänge eines digital codierten Dokuments protokolliert werden können. Beispielsweise kann protokolliert werden, wann wer auf das Dokument zugegriffen hat und ob bzw. welche Änderungen an dem Dokument vorgenommen wurden. Ferner können beispielsweise Kopiervorgänge des Dokuments protokolliert und die erweiterte Blockchain-Struktur zu der erstellten Kopie hinzugefügt werde. Die Blockchain-Struktur umfasst in diesem Fall eine Abstammungshistorie der erstellten Kopie.

Nach Ausführungsformen umfasst das Verfahren ferner:

- Empfangen einer Anfrage nach dem bearbeiteten Dokument mittels einer Kommunikationsschnittstelle über ein Netzwerk von einem anfragenden Computersystem,
- Versenden des bearbeiteten Dokuments mit der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der Blockchain-Struktur die Bearbeitungshistorie und/oder Abstammungshistorie des bearbeiteten Dokuments nachvollzogen und/oder nachgeprüft werden kann.

Bei dem Dokument kann es sich insbesondere um eine Nachrichtenmeldung handeln, etwa in Form einer Webseite, einer mit einer Webseite verlinkten oder in eine Webseite integrierten Datei oder eines Postings. Unter einer Webseite bzw. Webdokument, Internetseite oder Webpage wird ein über das Internet bereitgestelltes Dokument verstanden, das beispielsweis von einem Webserver angeboten und mit einem Browser eines Nutzer-Computersystems unter Angabe eines einheitlichen Ressourcenzeigers, d.h. "Uniform Resource Locators" (URL), abgerufen werden kann. Beispielsweise handelt es sich um ein HTML-Dokument. Unter einem Posting wird hier ein einzelner Beitrag auf einer Internet-Plattform, wie etwa einer Social-Media-Plattform, in einem Webforum oder einem Blog verstanden.

Ausführungsformen umfassen ein elektronisches Datenspeichersystem zum manipulationssicheren Speichern von Daten in einer bidirektional verketteten Blockchain-Struktur, welche zumindest einen ersten und einen letzten Block umfasst, wobei das Datenspeichersystem einen Prozessor und einen elektronischen Speicher mit maschinenlesbaren Instruktionen umfasst, wobei ein Ausführen der maschinenlesbaren Instruktionen durch den Prozessor das Datenspeichersystem dazu veranlasst, ein Verfahren auszuführen, welches umfasst:

- Bereitstellen einer bidirektional verketteten Blockchain-Struktur,
- Bereitstellen der zu speichernden Daten,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Berechnen eines ersten Prüfwerts des letzten Blocks zum bidirektional Verketten des zusätzlichen Blocks mit dem letzten Block der Blockchain-Struktur, wobei der erste Prüfwert des letzten Blocks unter Verwendung eines ersten Hashwerts berechnet wird, dessen Berechnung ein Anwenden einer Hashfunktion auf die in dem letzten Block gespeicherten Daten und die in dem zusätzlichen Block zu speichernden Daten umfasst,
- Berechnen eines Prüfwerts des zusätzlichen Blocks zum bidirektional Verketten des zusätzlichen Blocks mit dem letzten Block der Blockchain-Struktur, wobei der Prüfwert des zusätzlichen Blocks unter Verwendung eines zweiten Hashwerts berechnet wird, dessen Berechnung ein Anwenden der Hashfunktion auf die in dem letzten Block gespeicherten Daten und die auf die in dem zusätzlichen Block zu speichernden Daten umfasst,
- Hinzufügen des ersten Prüfwerts des letzten Blocks zu dem letzten Block,
- Hinzufügen des Prüfwerts des zusätzlichen Blocks zu dem zusätzlichen Block,
- Speichern der um den zusätzlichen Block erweiterten Blockchain-Struktur.

Nach Ausführungsformen ist das elektronisches Datenspeichersystem dazu konfiguriert eine oder mehrere der zuvor genannten Ausführungsformen des Verfahrens zum manipulationssicheren Speichern von Daten auszuführen.

Nach Ausführungsformen umfasst das elektronisches Datenspeichersystem ein Dateisystem. Das Dateisystem stellt eine Ablageorganisation auf dem Datenspeicher bereit. Daten wie etwa digital codierte Dokumente können als Dateien auf dem Datenspeicher gespeichert werden. Ferner können die Dateien gelesen, verändert oder gelöscht werden.

Nach Ausführungsformen umfasst das elektronische Datenspeichersystem eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw.

Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen umfassen ein Telekommunikationssystem, welches das zuvor genannte elektronische Datenspeichersystem und eine Kommunikationsschnittstelle zum Kommunizieren über ein Netzwerk umfasst, wobei das Bereitstellen der zu speichernden Daten ein Empfangen der Daten mittels einer Kommunikationsschnittstelle über ein Netzwerk umfasst, wobei das ausgeführte Verfahren ferner umfasst:

- Empfangen einer Anfrage nach einer aktuellen Version der Blockchain-Struktur mittels der Kommunikationsschnittstelle über das Netzwerk von einem anfragenden Telekommunikationssystem,
- Versenden der erweiterten Blockchain-Struktur mittels der Kommunikationsschnittstelle über das Netzwerk an das anfragende Telekommunikationssystem in Antwort auf die empfangene Anfrage.

Bei dem Telekommunikationssystem handelt es sich beispielsweise um ein Computersystem, welches zur Kommunikation über ein Netzwerk konfiguriert ist.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Daten verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Ausführungsformen umfassen ein Telekommunikationssystem, welches das zuvor genannte elektronische Datenspeichersystem und eine Kommunikationsschnittstelle zum Kommunizieren über ein Netzwerk umfasst, wobei die zu speichernden Daten Daten umfassen, welche einen Bearbeitungsvorgang eines digital codierten Dokuments kennzeichnen, wobei das Bereitstellen der Blockchain-Struktur ein Empfangen des zu bearbeitenden Dokuments, welches die Blockchain-Struktur umfasst, und ein Auslesen der Blockchain-Struktur aus dem empfangenen Dokument umfasst, wobei das Bereitstellen der zu speichernden Daten ein Bearbeiten des empfangenen Dokuments und ein Erzeugen der Daten umfasst, wobei das Speichern der erweiterten Blockchain-Struktur ein Hinzufügen der erweiterten Blockchain-Struktur zu dem bearbeiteten Dokument und ein Speichern des bearbeiteten Dokuments mit der erweiterten Blockchain-Struktur umfasst, wobei das ausgeführte Verfahren ferner umfasst:

- Empfangen einer Anfrage nach dem bearbeiteten Dokument mittels der Kommunikationsschnittstelle über das Netzwerk von einem anfragenden Telekommunikationssystem,
- Versenden des bearbeiteten Dokuments mit der erweiterten Blockchain-Struktur mittels der Kommunikationsschnittstelle über das Netzwerk an das anfragende Telekommunikationssystem in Antwort auf die empfangene Anfrage.

Nach Ausführungsformen erfolgt das Versenden des digital codierten Dokuments auf einen Empfang einer Anforderung zum Versenden. Beispielsweise handelt es sich bei dem digital codierten Dokument um ein HTML-Dokument. Beispielsweise wird das digital codierten Dokument auf einer Internet-Plattform bereitgestellt, etwa als Webseite oder als Posting. Unter einem Posting wird hier ein einzelner Beitrag auf einer Internet-Plattform, wie etwa einer Social-Media-Plattform, in einem Webforum oder einem Blog verstanden. Ferner kann das digital codierten Dokument zum Download bereitgestellt sein. Beispielsweise umfasst eine Webseite oder ein Posting einen Link zum Aufrufen des digital codierten Dokuments.

Auf eine entsprechende Anforderung hin, etwa in Form einer HTTP-GET-Anforderung, wird das digital codierten Dokument an das anfordernde Computersystem versendet.

Nach alternativen Ausführungsformen erfolgt das Versenden des digital codierten Dokuments unabhängig von einer Anforderung zum Versenden. Beispielsweise wird das Dokument in Form einer E-Mail, einer Instant-Massage, einer Tonnachricht, einer Videonachricht, einer Bildnachricht, einer SMS oder einer MMS versendet bzw. von einem der zuvor genannten Nachrichtentypen umfasst. Instant Messaging bezeichnet eine Kommunikationsmethode, bei der zwei oder mehr Teilnehmer per digital codierter Text-, Sprach-, Bild- und/oder Videonachrichten miteinander kommunizieren. Dabei löst der Absender die Übermittlung der Nachricht aus, d.h. ein sog. Push-Verfahren findet Anwendung, so dass die Nachrichten möglichst unmittelbar bei dem vorgesehenen Empfänger ankommen. Die Teilnehmer sind dabei mittels eines Computerprogramms über ein Netzwerk, wie etwa das Internet, direkt oder über einen Server miteinander verbunden sein.

Im Weiteren werden Ausführungsformen der Erfindung mit Bezugnahme auf die Zeichnungen näher erläutert. Es zeigen:

Figur 1 ein schematisches Blockdiagramm einer Ausführungsformen einer exemplarischen Blockchain-Struktur,
Figuren 2 schematische Blockdiagramme von ersten Ausführungsformen eines ersten Blocks der Blockchain-Struktur aus Figur 1,
Figuren 3 schematische Blockdiagramme von ersten Ausführungsformen eines letzten Blocks der Blockchain-Struktur aus Figur 1,
Figuren 4 schematische Blockdiagramme von ersten Ausführungsformen des letzten Blocks der Blockchain-Struktur aus Figur 1,

| Figuren 5 | schematische Blockdiagramme von ersten Ausführungsformen eines zusätzlichen Blocks der Blockchain-Struktur aus Figur 1, |
| Figur 6 | ein schematisches Flussdiagramm eines ersten exemplarischen Verfahrens zum Hinzufügen eines zusätzlichen Blocks, |
| Figur 7 | ein schematisches Flussdiagramm eines zweiten exemplarischen Verfahrens zum Hinzufügen eines zusätzlichen Blocks, |
| Figuren 8 | schematische Blockdiagramme von zweiten Ausführungsformen eines ersten Blocks der Blockchain-Struktur aus Figur 1, |
| Figuren 9 | schematische Blockdiagramme von zweiten Ausführungsformen eines letzten Blocks der Blockchain-Struktur aus Figur 1, |
| Figuren 10 | schematische Blockdiagramme von zweiten Ausführungsformen des letzten Blocks der Blockchain-Struktur aus Figur 1, |
| Figuren 11 | schematische Blockdiagramme von zweiten Ausführungsformen eines zusätzlichen Blocks der Blockchain-Struktur aus Figur 1, |
| Figur 12 | ein schematisches Blockdiagramm einer Ausführungsform eines exemplarischen Datenspeichersystems, |
| Figur 13 | ein schematisches Blockdiagramm einer Ausführungsform eines exemplarischen Telekommunikationssystems. |

Elemente der nachfolgenden Ausführungsformen, die einander entsprechen, werden mit denselben Bezugszeichen gekennzeichnet.

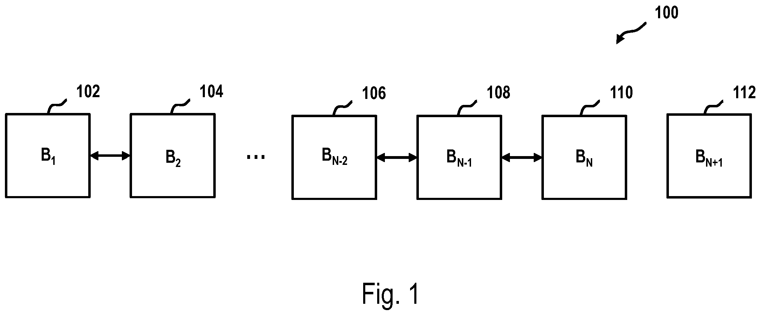

Figur 1 zeigt eine Ausführungsform einer exemplarischen Blockchain-Struktur 100, welche N Blöcke 102, 104, 106, 108, 110 umfasst. Die Blockchain-Struktur 100 soll um einen zusätzlichen Block 112 erweitert werden. Die Blöcke 102, 104, 106, 108, 110 der Blockchain-Struktur 100 sind durch Prüfwerte bidirektional miteinander verkettet. Die einzelnen bidirektionalen Verknüpfungen sind schematisch angedeutet durch Doppelpfeile. Die inneren Blöcke 104, 106, 108 der Blockchain-Struktur 100 umfassen jeweils zumindest zwei Prüfwerte, bei welchen es sich beispielsweise um Hashwerte handelt. Ein erster dieser Prüfwerte ist beispielsweise von den Daten des entsprechenden inneren Blocks und von den Daten des unmittelbar nachfolgenden Blocks abhängig. Ein zweiter dieser Prüfwerte ist beispielsweise von den Daten des entsprechenden inneren Blocks und von den Daten des unmittelbar vorangehenden Blocks abhängig. Der erste und der zweite Prüfwert sind beispielsweise in einem gemeinsamen Hashwert miteinander kombiniert. Die entsprechenden Prüfwerte sind in die Blöcke integriert. Der Prüfwert zur Verknüpfung des vorletzten Blocks 108 der Blockchain-Struktur 100 mit dem letzten Block 110 umfasst somit sowohl Daten, welche in dem vorletzten Blocks 108 gespeichert sind, als auch Daten, welche in dem letzten Blocks 110 gespeichert sind. Somit stellen der im vorletzten Block 108 und der in letzten Block 110 gespeicherte Prüfwert nur solange korrekte Hashwerte der beiden entsprechenden Blöcke dar, solange die Daten beider Blöcke unverändert bleiben. Im Falle einer Manipulation, beispielsweise des letzten Block 110, passt der Prüfwert des vorletzten Blocks 108 nicht mehr zu den Daten des letzten Blocks 110, woran sich die Manipulation erkennen lässt.

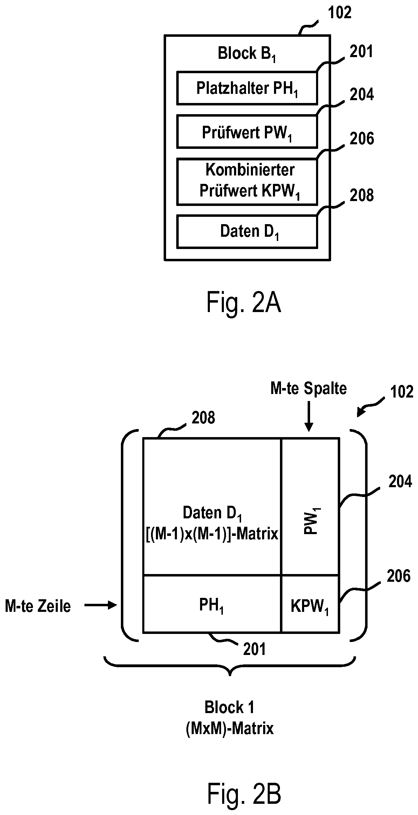

Figur 2A zeigt ein schematisches Blockdiagramm einer ersten Ausführungsform des ersten Blocks $B_1$ 102 aus Figur 1. Der Block $B_1$ 102 umfasst einen Platzhalter $PH_1$ 201, welcher den Block $B_1$ 102 als ersten Block der Blockchain-Struktur 100 kennzeichnet. Dieser Platzhalter $PH_1$ 201 ist nicht dazu vorgesehen durch einen anderen Wert ersetzt zu werden, wenn die Blockchain-Struktur 100 erweitert wird. Vielmehr bleibt der Platzhalter $PH_1$ 201, da der Block $B_1$ 102 dazu vorgesehen ist unverändert der erste Block der Blockchain-Struktur 100 zu bleiben.

Ferner umfasst der Block $B_1$ 102 einen Prüfwert $PW_1$ 204, welcher beispielsweise ein Hashwert einer Kombination der in dem Block $B_1$ 102 gespeicherten Daten $D_1$ 208 und den in dem zweiten Block 104 gespeicherten Daten $D_2$ ist. Beispielsweise wird der Prüfwert $PW_1$ 204 wie folgt berechnet:

$$PW_1 = Hash\{D_2 + Hash[D_1 + PH_1]\}.$$

Zudem umfasst der Block $B_1$ 102 einen kombinierten Prüfwert $KPW_1$ 206, welcher beispielsweise ein Hashwert einer Kombination des Platzhalters $PH_1$ 201 und des Prüfwerts $PW_1$ 204 ist. Mit anderen Worten handelt es sich bei dem kombinierten Prüfwert $KPW_1$ 206 um einen mehrfach gehashten Hashwert, welcher unter Verwendung der Daten $D_1$ des ersten Blocks $B_1$ 102 und den Daten $D_2$ des zweiten Blocks $B_2$ 104 der Blockchain-Struktur 100 berechnet wurde und diese beiden Blöcke 102, 104 somit miteinander verkettet. Der kombinierte Prüfwert $KPW_1$ 206 wird beispielsweise wie folgt berechnet:

$$KPW_1 = Hash\{PH_1 + PW_1\}.$$

Figur 2B zeigt ein schematisches Blockdiagramm einer weiteren Ausführungsform des ersten Blocks $B_1$ 102 aus Figur 2A. Der Block $B_1$ 102 ist beispielswiese in Form einer quadratischen (MxM)-Matrix strukturiert. Die Daten $D_1$ des Blocks $B_1$ 102 sind in Einträgen einer quadratischen [(M-1)x(M-1)]-Matrix 208 gespeichert. Der Platzhalter $PH_1$ 201 ist beispielsweise in der M-ten Zeile der (MxM)-Matrix gespeichert. Der Prüfwert $PW_1$ 204 ist beispielsweise in der M-ten Spalte der (MxM)-Matrix gespeichert. Der kombinierte Prüfwert $KPW_1$ 206 ist beispielsweise in dem Element $a_{MM}$ der (MxM)-Matrix gespeichert. Nach Ausführungsformen besteht der Platzhalter $PH_1$ 201 ausschließlich aus Nullen, sodass alle Element $a_{iM}$ der (MxM)-Matrix mit $1 \leq i < M$ gleich Null gesetzt sind.

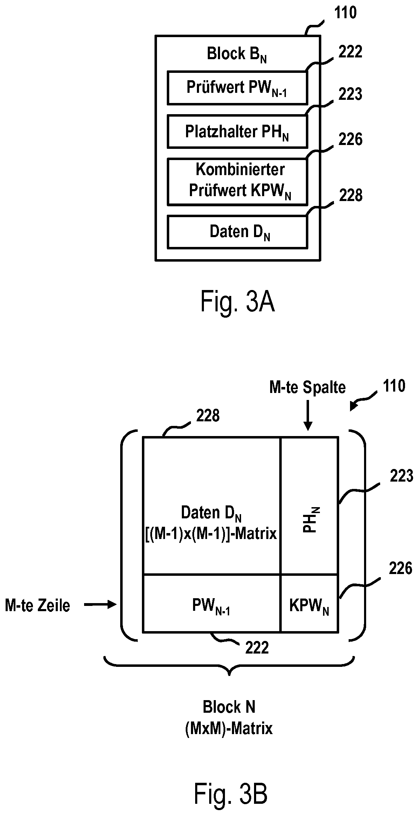

Figur 3A zeigt ein schematisches Blockdiagramm einer ersten Ausführungsform des letzten Blocks $B_N$ 110 der Blockchain-Struktur 100 aus Figur 1, bevor die Blockchain-Struktur 100 um den zusätzlichen Block $B_{N+1}$ 112 erweitert wird. Bei dem letzten Blocks $B_N$ 110 der Blockchain-Struktur 100 handelt es sich um den N-ten Block der Blockchain-Struktur 100. Der Block $B_N$ 110 umfasst einen Platzhalter $PH_N$ 223, welcher den Block $B_N$ 110 als letzten Block der Blockchain-Struktur 100 kennzeichnet. Dieser Platzhalter $PH_N$ 223 ist dazu vorgesehen durch einen Prüfwert einer bidirektionalen Verknüpfung mit dem zusätzlichen Block $B_{N+1}$ Wert ersetzt zu werden, wenn die Blockchain-Struktur 100 erweitert wird.

Ferner umfasst der Block $B_N$ 110 einen Prüfwert $PW_{N-1}$ 222, welcher beispielsweise ein Hashwert einer Kombination der in dem vorletzten Block $B_{N-1}$ 108 gespeicherten Daten $D_{N-1}$ und den in dem letzten Block $B_N$ 110 gespeicherten Daten $D_N$ ist. Beispielsweise wird der Prüfwert $PW_{N-1}$ 222 des letzten Blocks $B_N$ 110 wie folgt berechnet:

$$PW_{N-1} = Hash\{D_N + Hash[D_{N-1} + PW_{N-2}]\},$$

wobei $PW_{N-2}$ einen Prüfwert des vorletzten Blocks $B_{N-2}$ 106 bezeichnet, welcher der oben genannten rekursiven Formel folgend analog zu Prüfwert $PW_{N-1}$ 222 des letzten Blocks $B_N$ 110 berechnet werden kann.

Zudem umfasst der Block $B_N$ 110 einen kombinierten Prüfwert $KPW_N$ 226, welcher beispielsweise ein Hashwert einer Kombination des Platzhalters $PH_N$ 223 und des Prüfwerts $PW_{N-1}$ 222 ist. Mit anderen Worten handelt es sich bei dem kombinierten Prüfwert $KPW_N$ 226 um einen mehrfach gehashten Hashwert, welcher unter Verwendung der Daten $D_{N-1}$ des vorletzten Blocks $B_{N-1}$ 108 und den Daten $D_N$ des letzten Blocks $B_N$ 110 der Blockchain-Struktur 100 berechnet wurde und diese beiden Blöcke 108, 110 somit miteinander verkettet. Der kombinierte Prüfwert $KPW_N$ 226 wird beispielsweise wie folgt berechnet:

$$KPW_N = Hash\{PW_{N-1} + PH_N\},$$

solange es sich bei dem Block $B_N$ 110 um den letzten Block der Blockchain-Struktur 100 handelt und der Platzhalter $PH_N$ 223, welcher den Blocks $B_N$ 110 als letzten Block kennzeichnet, noch nicht durch einen Prüfwert einer weiteren bidirektionalen Verknüpfung mit einem zusätzlichen Block $B_{N+1}$ 112 ersetzt wurde.

Figur 3B zeigt ein schematisches Blockdiagramm einer weiteren Ausführungsform des letzten Blocks $B_N$ 110 aus Figur 3A. Der Block $B_N$ 110 ist beispielswiese in Form einer quadratischen (MxM)-Matrix strukturiert. Die Daten $D_N$ des Blocks $B_N$ 110 sind in Einträgen einer quadratischen [(M-1)x(M-1)]-Matrix 228 gespeichert. Der Platzhalter $PH_N$ 223 ist beispielsweise in der M-ten Spalte der (MxM)-Matrix gespeichert. Der Prüfwert $PW_N$ 222 ist beispielsweise in der M-ten Zeile der (MxM)-Matrix gespeichert. Der kombinierte Prüfwert $KPW_N$ 226 ist beispielsweise in dem Element $a_{MM}$ der (MxM)-Matrix gespeichert. Nach Ausführungsformen besteht der Platzhalter $PH_N$ 223 ausschließlich aus Nullen, sodass alle Element $a_{Mi}$ der (MxM)-Matrix mit $1 \leq i < M$ gleich Null gesetzt sind.

Nach Ausführungsformen wird der Prüfwert, welcher eine bidirektionale Verknüpfung zu einem vorangehenden Block implementiert in der M-ten Zeile der (MxM)-Matrixstruktur gespeichert, während der Prüfwert, welcher eine bidirektionale Verknüpfung zu einem nachfolgenden Block implementiert in der M-ten Spalte der (MxM)-Matrixstruktur gespeichert. Somit umfasst jeder Block, welcher mit zwei Blöcken, d.h. einem vorangehenden und einem nachfolgenden Block, bidirektional verkettet ist, einen Prüfwert für jede der beiden Verknüpfungen. Nach Ausführungsformen umfasst der Block ferner einen kombinierten Prüfwert, welcher einen Hashwert einer Kombination der beiden Prüfwerte der beiden bidirektionalen Verknüpfungen umfasst. Handelt es sich bei dem entsprechenden Block um den ersten oder letzten Block 102, 110 der Blockchain-Struktur 100, d.h. einen Block, welcher nur mit einem weiteren Block (dem zweiten Block 104 bzw. dem vorletzten Block 108) bidirektional verkettet ist, so umfasst der Block einen Prüfwert, welcher die eine bidirektionale Verknüpfung implementiert, sowie einen Platzhalter für einen weiteren Prüfwert einer weiteren potentiellen bidirektionalen Verknüpfung zu einem weiteren Block. Dieser Platzhalter kennzeichnet den entsprechenden Block als den ersten oder letzten Block der Blockchain-Struktur. Der kombinierte Prüfwert des entsprechenden Blocks umfasst den Prüfwert der entsprechenden einen bidirektionalen Verknüpfung sowie den Platzhalter. Der kombinierte Prüfwert beruht dabei auf einer mehrfachen Anwendung der Hashfunktion.

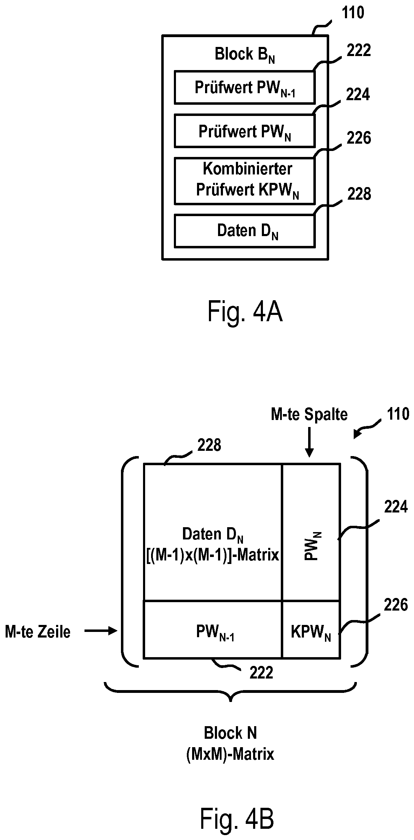

Figuren 4A und 4B zeigen schematische Blockdiagramme der Ausführungsformen des letzten Blocks $B_N$ 110 der Blockchain-Struktur 100 aus der Figur 3A bzw. 3B nach Erweiterung der Blockchain-Struktur 100 um den zusätzlichen Block $B_{N+1}$ 112, sodass die erweiterte Blockchain-Struktur 100 N+1 Blöcke umfasst. Der zusätzliche Block $B_{N+1}$ 112 ist mithin der neue letzte Block der Blockchain-Struktur 100, während der bisherige letzte Block $B_N$ 110 der vorletzte Block der erweiterten Blockchain-Struktur 100 ist.

Zum Erweitern der Blockchain-Struktur 100 um den zusätzlichen Block $B_{N+1}$ 112 wird der letzte Block $B_N$ 110 bidirektional mit dem zusätzlichen Block $B_{N+1}$ 112 verkettet. Hierbei wird ein Prüfwert $PW_N$ 224 berechnet, welcher beispielsweise ein Hashwert einer Kombination der in dem letzten Block $B_N$ 110 gespeicherten Daten $D_N$ 228 und den in dem zusätzlichen Block $B_{N+1}$ 112 zu speichernden Daten $D_{N+1}$ ist. Beispielsweise wird der Prüfwert $PW_N$ 224 des letzten Blocks $B_N$ 110 wie folgt berechnet:

$$PW_N = \text{Hash}\{D_{N+1} + \text{Hash}[D_N + PW_{N-1}]\}.$$

Der Platzhalter $PH_N$ wird durch den Prüfwert $PW_N$ 224 ersetzt und der kombinierte Prüfwert $KPW_N$ 226 wird aktualisiert. Beispielsweise wird der aktualisierte kombinierte Prüfwert $KPW_N$ 226 wie folgt berechnet:

$$KPW_N = \text{Hash}\{PW_{N-1} + PW_N\} = \text{Hash}\{PW_{N-1} + \text{Hash}\{D_{N+1} + \text{Hash}[D_N + PW_{N-1}]\}\}.$$

Der kombinierte Prüfwert $KPW_N$ 226 umfasst somit Daten $D_N$ 228 des letzten Blocks $B_N$ 110 und Daten $D_{N+1}$ des zusätzlichen Blocks $B_{N+1}$ 112. Ferner ist der kombinierte Prüfwert $KPW_N$ 226 aufgrund der Rekursivität der zuvor genannten Formel von den Daten aller vorangehender Blöcke der Blockchain-Struktur 100 abhängig.

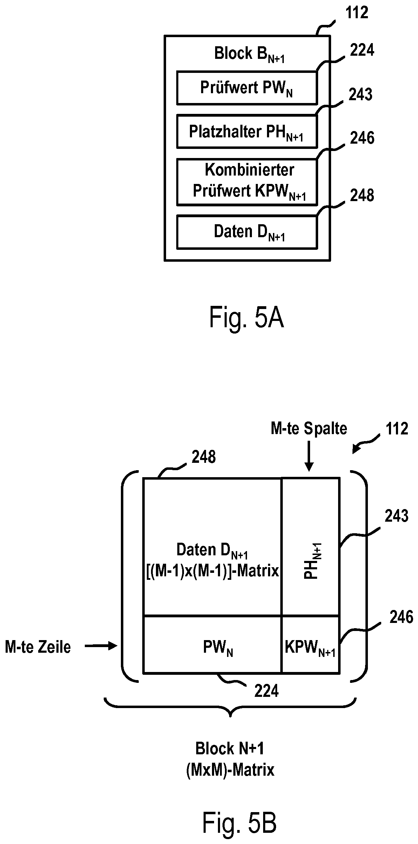

Figur 5A zeigt ein schematisches Blockdiagramm einer ersten Ausführungsform des zusätzlichen Blocks $B_{N+1}$ 112 der Blockchain-Struktur 100 aus Figur 1, nachdem die Blockchain-Struktur 100 um den zusätzlichen Block $B_{N+1}$ 112 erweitert wurde. Bei dem zusätzlichen Block $B_{N+1}$ 112 der Blockchain-Struktur 100 handelt es sich um den (N+1)-ten Block der erweiterten Blockchain-Struktur 100. Der Block $B_{N+1}$ 112 umfasst einen Platzhalter $PH_{N+1}$ 243, welcher den Block $B_{N+1}$ 112 als letzten Block der erweiterten Blockchain-Struktur 100 kennzeichnet. Dieser Platzhalter $PH_N$ 243 ist dazu vorgesehen durch einen Prüfwert einer bidirektionalen Verknüpfung im Falle einer zusätzlichen Erweiterung der Blockchain-Struktur 100 ersetzt zu werden.

Ferner umfasst der Block $B_{N+1}$ 112 den Prüfwert $PW_N$ 224 der bidirektionalen Verknüpfung zwischen Block $B_N$ 110 und Block $B_{N+1}$ 112. Zudem umfasst der Block $B_{N+1}$ 112 einen kombinierten Prüfwert $KPW_{N+1}$ 246, welcher beispielsweise ein Hashwert einer Kombination des Platzhalters $PH_{N+1}$ 243 und des Prüfwerts $PW_N$ 224 ist. Mit anderen Worten handelt es sich bei dem kombinierten Prüfwert $KPW_{N+1}$ 246 um einen mehrfach gehashten Hashwert, welcher unter Verwendung der Daten $D_N$ des Blocks $B_N$ 110 und den Daten $D_{N+1}$ des zusätzlichen Blocks $B_{N+1}$ 112 berechnet wird. Der kombinierte Prüfwert $KPW_{N+1}$ 246 wird beispielsweise wie folgt berechnet:

$$KPW_{N+1} = \text{Hash}\{PW_N + PH_{N+1}\}.$$

Hierbei handelt es sich bei dem Block $B_{N+1}$ 112 um den letzten Block der Blockchain-Struktur 100. Wird der Platzhalter $PH_{N+1}$ 243 im Zuge einer Erweiterung der Blockchain-Struktur 100 durch einen Prüfwert ersetzt, so wird der kombinierte Prüfwert $KPW_{N+1}$ 246 durch einen aktualisierten kombinierten Prüfwert $KPW_{N+1}$ 246 ersetzt, welcher unter Verwendung des Prüfwerts berechnet wird, welcher den Platzhalter $PH_{N+1}$ 243 ersetzt.

Figur 5B zeigt ein schematisches Blockdiagramm einer weiteren Ausführungsform des zusätzlichen Blocks $B_{N+1}$ 112 aus Figur 5A. Der Block $B_{N+1}$ 112 ist beispielsweise in Form einer quadratischen (MxM)-Matrix strukturiert. Die Daten $D_{N+1}$ des Blocks $B_{N+1}$ 112 sind in Einträgen einer quadratischen [(M-1)x(M-1)]-Matrix 248 gespeichert. Der Platzhalter $PH_{N+1}$ 243 ist beispielsweise in der M-ten Spalte der (MxM)-Matrix gespeichert. Der Prüfwert $PW_{N+1}$ 224 ist beispielsweise in der M-ten Zeile der (MxM)-Matrix gespeichert. Der kombinierte Prüfwert $KPW_{N+1}$ 246 ist beispielsweise in dem Element $a_{MM}$ der (MxM)-Matrix gespeichert. Nach Ausführungsformen besteht der Platzhalter $PH_{N+1}$ 243 ausschließlich aus Nullen, sodass alle Element $a_{Mi}$ der (MxM)-Matrix mit $1 \leq i < M$ gleich Null gesetzt sind.

Nach Ausführungsformen werden aufeinanderfolgende Blöcke zum Implementieren der bidirektionalen Verkettung jeweils mit einem identischen Prüfwert versehen, wie beispielsweise der Block $B_N$ 110 und der Block $B_{N+1}$ 112 jeweils mit dem identischen Prüfwert $PW_{N+i}$ 224 versehen werden.

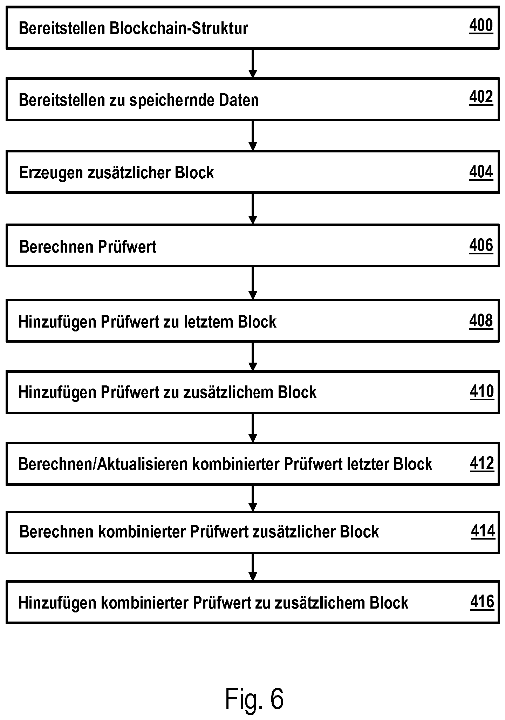

Figur 6 zeigt ein schematisches Flussdiagramm eines exemplarischen Verfahrens zum Hinzufügen eines zusätzlichen Blocks zu einer bidirektional verketteten Blockchain-Struktur. In Schritt 400 wird eine bidirektional verkettete Blockchain-Struktur bereitgestellt. In Schritt 402 werden zu speichernde Daten bereitgestellt. In Schritt 404 wird ein zusätzlicher Block für die Blockchain-Struktur erzeugt. Beispielsweise weist der zusätzliche Block die Form einer (MxM)-Matrix auf. Vor der bidirektionalen Verkettung mit der Blockchain-Struktur weist die Matrix des zusätzlichen Blocks beispielweise in der M-ten Zeile und M-ten Spalte jeweils einen Platzhalter auf. Beispielswiese weisen die Einträge der M-ten Zeile und M-ten Spalte nur Nullen auf. Die zu speichernden Daten werden in den Matrixelementen der verbliebenen $[(M-1)x(M-1)$-Untermatrix gespeichert. In Schritt 406 wird der Prüfwert $PW_N$ der bidirektionalen Verknüpfung berechnet. Der Prüfwert $PW_N$ umfasst beispielsweise einen Hashwert einer Kombination der in dem letzten Block $B_N$ gespeicherten Daten $D_N$ und den in dem zusätzlichen Block $B_{N+1}$ zu speichernden Daten $D_{N+1}$ ist. Ferner geht in den Prüfwert $PW_N$ der Prüfwert $PW_{N-1}$ des Vorgängerblocks $B_{N-1}$ mit ein. Der Prüfwert $PW_{N-1}$ des Vorgängerblocks $B_{N-1}$ wird nach Ausführungsformen in der M-ten Zeile des letzten Blocks $B_N$ bereitgestellt. Beispielsweise wird der Prüfwert $PW_N$ des letzten Blocks $B_N$ wie folgt berechnet:

$$PW_N \ = \ Hash\{D_{N+1} + Hash[D_N + PW_{N-1}]\}.$$

In Schritt 408 wird der Prüfwert $PW_N$ zu dem letzten Block $B_N$ hinzugefügt. Beispielsweise wird er in die M-te Spalte geschrieben. In Schritt 410 wird der Prüfwert $PW_N$ zu dem zusätzlichen Block $B_{N+1}$ hinzugefügt. Beispielsweise wird er in die M-te Zeile geschrieben. In Schritt 412 wird der kombinierte Prüfwert $KPW_N$ des letzten Blocks $B_N$ unter Verwendung des Prüfwerts $PW_N$ neu berechnet und das den kombinierten Prüfwert $KPW_N$ speichernde Matrixelement $a_{MM}$ damit aktualisiert. Beispielsweise wird der aktualisierte kombinierte Prüfwert $KPW_N$ wie folgt aus den Einträgen der M-ten Zeile und M-ten Spalte des letzten Blocks $B_N$ berechnet:

$$KPW_N = Hash\{PW_{N-1} + PW_N\}.$$

In Schritt 414 wird der kombinierte Prüfwert $KPW_{N+1}$ des zusätzlichen Blocks $B_{N+1}$ unter Verwendung des Prüfwerts $PW_N$ berechnet. Beispielsweise wird der kombinierte Prüfwert $KPW_{N+1}$ wie folgt aus den Einträgen der M-ten Zeile (Prüfwert $PW_N$) und M-ten Spalte (Platzhalter $PH_N$) des zusätzlichen Blocks $B_{N+1}$ berechnet:

$$KPW_{N+1} = Hash\{PW_N + PH_{N+1}\}.$$

In Schritt 416 wird der kombinierte Prüfwert $KPW_{N+1}$ beispielsweise im Matrixelement $a_{MM}$ des zusätzlichen Blocks $B_{N+1}$ gespeichert. Damit sind die beiden Blöcke $B_N$ und $B_{N+1}$ bidirektional miteinander verkettet und die Blockchain-Struktur um den zusätzlichen Blocks $B_{N+1}$ erweitert. Dieses Verfahren wird für jeden zusätzlich anzuhängenden Block wiederholt.

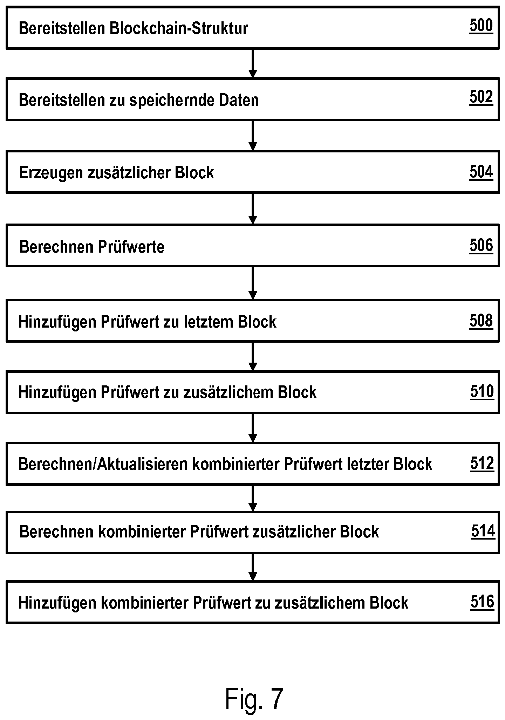

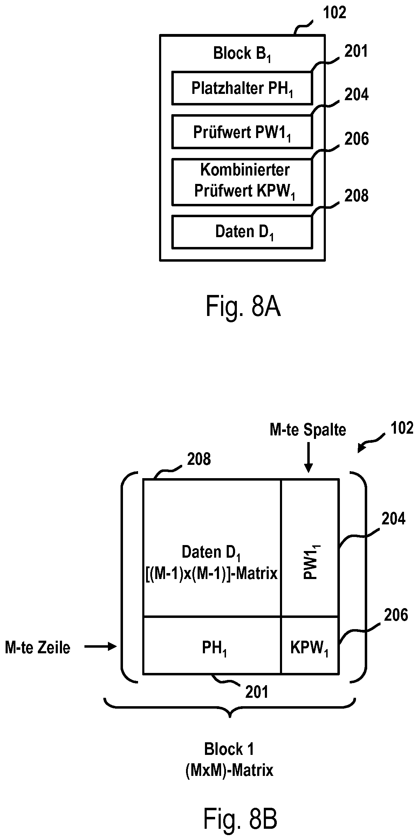

Die Figuren 8 bis 11 entsprechen des Figuren 2 bis 5 und zeigen zweite Ausführungsformen der Blöcke der Blockchain-Struktur 100 aus Figur 1 im Falle eines alternativen Verknüpfungsverfahrens zum Erstellen bidirektionaler Verknüpfungen gemäß Figur 7. Figur 7 zeigt das entsprechende Verfahren in Form eines schematischen Flussdiagramms. Die Schritte 500 bis 504 entsprechen dabei den Schritten 400 bis 404 aus Figur 6. In Schritt 506 werden Prüfwerte der bidirektionalen Verknüpfung zwischen den Blöcken $B_N$ und $B_{N+1}$ berechnet. Hierbei werden ein Prüfwert $PW1_N$ für den letzten Block $B_N$ und ein Prüfwert $PW2_N$ für den letzten Block $B_{N+1}$ berechnet. Zunächst wird eine Matrixoperation unter Verwendung der beiden Untermatrizen $D_N$ und $D_{N+1}$ durchgeführt, welche die gespeicherten Daten der Blöcke $B_N$ und $B_{N+1}$ umfassen. Beispielsweise wird eine Matrixmultiplikation $D_N*D_{N+1}$ durchgeführt. Die resultierende eindeutige Matrix wird als Eingabe für eine Hashfunktion $Hash(D_N*D_{N+1})$ verwendet. Durch die mathematische Eindeutigkeit der Matrixmultiplikationen kann sichergestellt, dass sich eine Manipulation der Daten $D_N$ im Block $B_N$ ebenso wie eine Manipulation der Daten $D_{N+1}$ im $B_{N+1}$ in einer Veränderung des Hashwertes $Hash(D_N*D_{N+1})$ bemerkbar macht. Der resultierende Hashwert wird zweigeteilt, beispielsweise gemäß der Formel:

$$Hash\{D_N*D_{N+1}\} = PW1_N + PW2_N.$$

In Schritt 508 wird der Prüfwert $PW1_N$ für den letzten Block $B_N$ zu diesem hinzugefügt, beispielsweise wird er in die M-te Spalte des Blocks $B_N$ geschrieben. In Schritt 510 wird der Prüfwert $PW2_N$ für den zusätzlichen Block $B_{N+1}$ zu diesem hinzugefügt, beispielsweise wird er in die M-te Spalte des Blocks $B_N$ geschrieben.

In Schritt 512 wird der kombinierte Prüfwert $KPW_N$ des letzten Blocks $B_N$ unter Verwendung des Prüfwerts $PW_N$ neu berechnet und das den kombinierten Prüfwert $KPW_N$ speichernde Matrixelement $a_{MM}$ mit dem neu berechneten Prüfwert $PW_N$ aktualisiert. Beispielsweise wird der aktualisierte kombinierte Prüfwert $KPW_N$ wie folgt aus den Einträgen der M-ten Zeile und M-ten Spalte des letzten Blocks $B_N$ berechnet:

$$KPW_N = Hash\{PW2_{N-1} + PW1_N\}.$$

In Schritt 514 wird der kombinierte Prüfwert $KPW_{N+1}$ des zusätzlichen Blocks $B_{N+1}$ unter Verwendung des Prüfwerts $PW2_N$ des zusätzlichen Blocks $B_{N+1}$ berechnet. Beispielsweise wird der kombinierte Prüfwert $KPW_{N+1}$ wie folgt aus den Einträgen der M-ten Zeile (Prüfwert $PW2_N$) und M-ten Spalte (Platzhalter $PH_N$) des zusätzlichen Blocks $B_{N+1}$ berechnet:

$$KPW_{N+1} = Hash\{PW2_N + PH_{N+1}\}.$$

In Schritt 516 wird der kombinierte Prüfwert $KPW_{N+1}$ beispielsweise im Matrixelement $a_{MM}$ des zusätzlichen Blocks $B_{N+1}$ gespeichert. Damit sind die beiden Blöcke $B_N$ und $B_{N+1}$ bidirektional miteinander verkettet und die Blockchain-Struktur um den zusätzlichen Blocks $B_{N+1}$ erweitert. Dieses Verfahren wird für jeden zusätzlich anzuhängenden Block wiederholt.

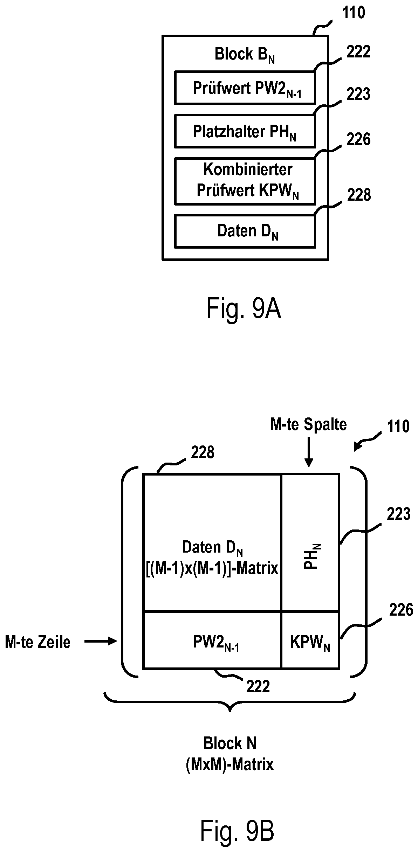

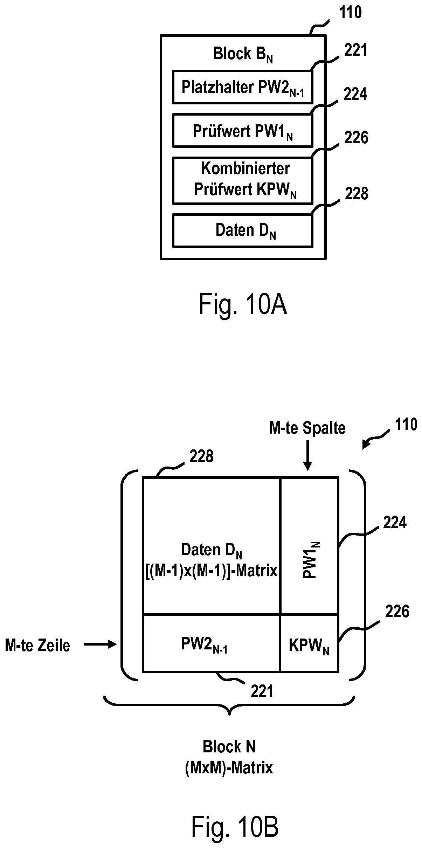

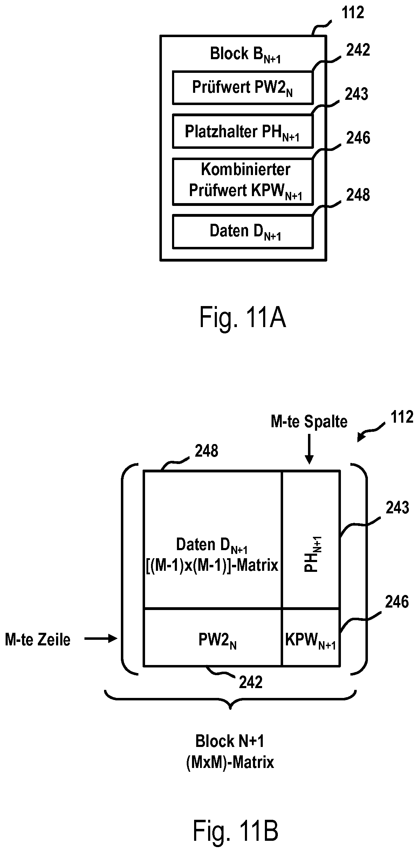

Die Figuren 8 bis 11 zeigen schematische zweite Ausführungsformen des ersten Blocks $B_1$ 102, des letzten Blocks $B_N$ 110 und des zusätzlichen Blocks $B_{N+1}$ 112 der Blockchain-Struktur 100 aus Figur 1. Die in den Figuren 8 bis 11 gezeigten Blöcke 102, 110, 112 entsprechen im Wesentlichen den in den Figuren 2 bis 6 gezeigten Blöcke 102, 110, 112. Die Blöcke 102, 110, 112 der Figuren 8 bis 11 unterscheiden sich jedoch darin, dass sie unter Verwendung des Verfahrens aus Figur 7 erstellt wurden. Somit sind die Prüfwerte, welche zum Erzeugen der bidirektionalen Verknüpfungen zwischen aufeinanderfolgenden Blöcken verwendet werden, im Allgemeinen nicht identisch, sondern unterscheiden sich voneinander. Somit umfasst der erste Block $B_1$ der Figuren 8A und 8B einen Prüfwert $PW1_1$ 204, welcher dem erste Block $B_1$ zugeordnet ist. Dieser Prüfwert $PW1_1$ 204 wurde zusammen mit einem dem zweiten Block $B_2$ 104 der Blockchain-Struktur 100 zugeordneten Prüfwert $PW2_1$ unter Verwendung des Verfahrens aus Figur 7 aus den Daten $D_1$ und $D_2$ des ersten und zweiten Blocks berechnet. Der letzte Block $B_N$ 110 der Figuren 9A und 9B sowie 10A und 10B umfasst einen dem letzte Block $B_N$ 110 zugeordneten Prüfwert $PW2_{N-1}$ 222, welcher zusammen mit einem dem vorletzten Block $B_{N-1}$ 108 der Blockchain-Struktur 100 zugeordneten Prüfwert $PW1_{N-1}$ unter Verwendung des Verfahrens aus Figur 7 aus den Daten $D_{N-1}$ und $D_N$ des vorletzten und letzten Blocks berechnet wurde. Ferner wird der in den Figuren 10A und 10B gezeigte Prüfwert $PW1_N$ 224 des letzten Blocks $B_N$ 110 zusammen mit dem in den Figuren 11A und 11B gezeigten Prüfwert $PW2_N$ 242 des zusätzlichen Blocks $B_N$ 112 berechnet. Hierbei wird das Verfahren aus Figur 7 auf die Daten $D_N$ des letzten Blocks $B_N$ 110 und die Daten des zusätzlichen Blocks $B_N$ 112 angewendet, welche beispielsweise mittels einer Matrixmultiplikation miteinander kombiniert werden.

Die kombinierten Prüfwerte $KPW_1$ 206, $KPW_N$ 226, $KPW_{N+1}$ 246 der in den Figuren 8 bis 11 gezeigten Blöcke $B_1$ 102, $B_N$ 110, $B_{N+1}$ 112 werden analog zu den kombinierten Prüfwerten $KPW_1$ 206, $KPW_N$ 226, $KPW_{N+1}$ 246 der Figuren 2 bis 6 berechnet. Das heißt der kombinierte Prüfwert $KPW_1$ 206 in den Figuren 8A und 8B wurde berechnet als $KPW_1 = Hash\{PH_1 + PW1_1\}$. Der kombinierte Prüfwert $KPW_N$ 226 in den Figuren 9A und 9B wurde berechnet als $KPW_N = Hash\{PW2_{N-1} + PH_N\}$. Der kombinierte Prüfwert $KPW_N$ 226 in den Figuren 10A und 10B wird im Zuge der bidirektionalen Verkettung der Blöcke $B_N$ 110 und $B_{N+1}$ 112 berechnet als $KPW_N = Hash\{PW2_{N-1} + PW1_N\}$. Der kombinierte Prüfwert $KPW_{N+1}$ 246 in den Figuren 11A und 11B wird schließlich berechnet als $KPW_{N+1} = Hash\{PW2_N + PH_N\}$.

Nach Auswendungsformen können die Prüfwerte, welche zum Erzeugen der bidirektionalen Verknüpfungen zwischen aufeinanderfolgenden Blöcken verwendet werden, auch identisch sein. Dies hängt davon ab, ob der Hashwert der Matrixmultiplikation symmetrisch (identische Prüfwerte) oder symmetrisch (unterschiedliche Prüfwerte) aufgeteilt wird.

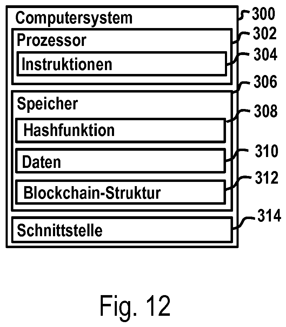

Figur 12 zeigt ein schematisches Blockdiagramm einer Ausführungsform eines exemplarischen Datenspeichersystems 300 in Form eines Computersystems zum manipulationssicheren Speichern von Daten 310 in einem elektronischen Speicher 306 unter Verwendung einer bidirektional verketteten Blockchain-Struktur 312. Das Computersystem 300 umfasst einen Prozessor 302, welcher dazu konfiguriert ist, Programminstruktionen 304 auszuführen. Durch Ausführung der Programminstruktionen 304 steuert der Prozessor 302 das Computersystem 300 so, dass es eine der zuvor beschriebenen Ausführungsformen des Verfahrens zum manipulationssicheren Speichern von Daten ausführt.

Das Computersystem 300 umfasst ferner einen Speicher 306, in welchem eine Hashfunktion 308 zum Berechnen von Hashwerten und die bidirektional verkettete Blockchain-Struktur 312 gespeichert sind. Der Speicher 306 umfasst zudem Daten 310, welche unter Verwendung einer bidirektional verketteten Blockchain-Struktur 312 gegen Manipulationen geschützt bzw. manipulationssicher gespeichert werden sollen. Beispielsweise führt das Computersystem 300 eines der Verfahren aus Figur 6 oder 7 aus und erzeugt einen zusätzlichen Block für die Blockchain-Struktur 312, welcher die manipulationssicher zu speichernden Daten 310 umfasst und bidirektional mit dem letzten Block der Blockchain-Struktur 312 verknüpft wird. Für die bidirektionale Verknüpfung des zusätzlichen Blocks werden beispielsweise Hashwerte unter Verwendung der Hashfunktion 308 berechnet, welche die Daten 310 sowie Daten aus der Blockchain-Struktur 312 umfassen, insbesondere Daten des letzten Blocks der Blockchain-Struktur 312.

Schließlich umfasst das Computersystem 300 eine Kommunikationsschnittstelle 314. Bei dieser Kommunikationsschnittstelle 314 kann es sich beispielsweise um eine Netzwerkschnittstelle zur Kommunikation über ein Netzwerk oder um eine Schnittelle zur Kommunikation mit einem Wechseldatenträger handeln. Über die Kommunikationsschnittstelle 314 können beispielsweise die Daten 310 und/oder die Blockchain-Struktur 312 bereitgestellt werden. Ferner kann es sich bei der Kommunikationsschnittstelle 314 um eine Nutzerschnittstelle zur Eingabe von Befehlen durch einen Nutzer und/oder zur Ausgabe von Ergebnissen handeln.

Nach Ausführungsformen können die Programminstruktionen 304 beispielsweise ein Datenbankmanagementsystem umfassen, welches in dem Speicher 306 gespeicherte Blockchain-Strukturen, wie etwa Blockchain-Struktur 312, verwaltet.

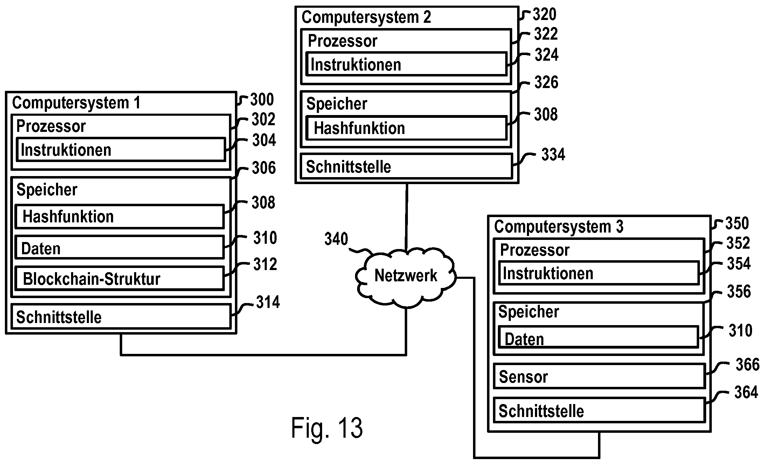

Figur 13 zeigt das exemplarische Datenspeichersystems 300 aus Figur 12, welches als ein Telekommunikationssystem konfiguriert ist, das mittels der Kommunikationsschnittstelle 314 über das Netzwerk 340 mit anderen Computersystemen, wie etwa den Computersystemen 320, 350, kommunizieren kann. Beispielsweise werden die Daten 310 von dem Computersystem 350 über das Netzwerk 340 bereitgestellt.

Das Computersystem 350 umfasst beispielsweise einen Speicher 356 zum Speichern der Daten 310, welche durch das Computersystem 300 gegen Manipulationen gesichert werden sollen. Nach Ausführungsformen handelt es sich bei den Daten 310 um Daten, welche kennzeichnend für ein digital codiertes Dokument sind. Beispielsweise handelt es sich bei den Daten 310 um einen Hashwert des Inhalts eines digital codierten Dokuments. Nach weiteren Ausführungsformen handelt es sich bei den Daten 310 um Transaktionsdaten einer von dem Computersystem 350 veranlassten, protokollierten und/oder ausgeführten Transaktion. Nach weiteren Ausführungsformen handelt es bei den Daten 310 um Sensordaten, welche mittels eines Sensors 366 des Computersystems 350 erfasst wurden. Ferner umfasst das Computersystem 350 einen Prozessor 352, welcher dazu konfiguriert ist, Programminstruktionen 354 auszuführen. Nach Ausführungsformen ist das Computersystems 350 ebenfalls als ein Telekommunikationssystem konfiguriert, welches mittels der Kommunikationsschnittstelle 364 über das Netzwerk 340 mit dem Computersystemen 300 kommunizieren kann. Ein Ausführen der Programminstruktionen 354 durch den Prozessor 352 veranlasst das Computersystems 350 beispielsweise die Daten 310 an das Computersystem 300 zu senden. Das Übersenden der Daten 310 über das Netzwerk 340 kann dabei beispielsweise in Antwort auf eine Anfrage durch das Computersystem 300 oder auf eigene Initiative durch das Computersystem 350 selbst veranlasst erfolgen.

Die Figur 13 zeigt zudem das Computersystem 320, welche beispielsweise ebenfalls als ein Telekommunikationssystem konfiguriert ist und mittels der Kommunikationsschnittstelle 364 über das Netzwerk 340 mit dem Computersystemen 300 kommunizieren kann. Das Computersystem 320 umfasst beispielsweise einen Prozessor 322 mit Programminstruktionen 324. Der Prozessor 322 ist dazu konfiguriert die Programminstruktionen 324 auszuführen, wobei ein Ausführen der Programminstruktionen 324 durch den Prozessor 322 das Computersystems 320 dazu veranlasst, die um die Daten 310 erweiterte Blockchain-Struktur 312 über das Netzwerk von dem Computersystem 300 anzufragen. In Antwort auf eine entsprechende Anfrage empfängt das Computersystems 320 beispielsweise die Blockchain-Struktur 312. Nach Ausführungsformen kann das Computersystems 320 die in der Blockchain-Struktur 312 gespeicherten Daten aus der Blockchain-Struktur 312 auslesen. Die Integrität der ausgelesenen Daten kann das Computersystems 320 beispielsweise unter Verwendung der in dem Speicher 326 gespeicherten Hashfunktion 308 prüfen, mit welcher die von der Blockchain-Struktur 312 umfassten Prüfwerte zum bidirektionalen Verketten der Blöcke nachgerechnet werden können. Bei den ausgelesenen Daten handelt es sich beispielsweise um Daten zum Belegen der Authentizität eines digital codierten Dokuments. Das entsprechende Dokument wird dem Computersystem 320 beispielsweise von dem Computersystem 350 über das Netzwerk 340 zur Verfügung gestellt. Handelt es sich bei den ausgelesenen Daten beispielsweise um einen Hashwert des Inhalts des bereitgestellten Dokuments, so kann anhand dieser Daten die Authentizität des Dokuments geprüft werden. Beispielswiese wird für das Dokument ein Hashwert durch das Computersystem 320 berechnet. Stimmt der berechnete Hashwert mit den ausgelesenen Daten überein, wird das bereitgestellte Dokument als authentisch anerkannt.

Die durch das Computersystem 320 empfangene Blockchain-Struktur 312 kann insbesondere auch für Prüfungen im Offline-Modus genutzt werden, d.h. wenn das Netzwerk 340 temporär nicht zur Verfügung steht. So können Daten, welche mithilfe der Blockchain-Struktur 312 auf ihre Authentizität zu überprüfen sind, beispielsweise durch das Computersystem 320 direkt empfangen oder eingelesen werden, ohne Netzwerk 340. Diese Daten können dann unter Verwendung der Blockchain-Struktur 312 auf ihre Authentizität überprüft werden, beispielsweise wenn die in der Blockchain-Struktur 312 gespeicherten Daten eine Kopie der zu überprüfenden Daten selbst oder ein Merkmal, wie etwa einen Hashwert, der zu überprüfenden Daten umfassen.

Bezugszeichenliste

| | |
|---|---|
| 100 | Blockchain-Struktur |
| 102 | erste Block |
| 104 | zweiter Block |
| 106 | vorvorletzter Block |
| 108 | vorletzter Block |
| 110 | letzter Block |
| 112 | zusätzlicher Block |
| 201 | Platzhalter |
| 204 | Prüfwert |
| 206 | kombinierter Prüfwert |
| 208 | Daten |
| 222 | Prüfwert |
| 223 | Platzhalter |
| 224 | Prüfwert |
| 226 | kombinierter Prüfwert |
| 228 | Daten |
| 242 | Prüfwert |
| 243 | Platzhalter |
| 246 | kombinierter Prüfwert |
| 248 | Daten |
| 300 | Computersystem |
| 302 | Prozessor |
| 304 | Programminstruktionen |
| 306 | Speicher |
| 308 | Hashfunktion |
| 310 | Daten |
| 312 | Blockchain-Struktur |
| 314 | Kommunikationsschnittstelle |
| 320 | Computersystem |
| 322 | Prozessor |
| 324 | Programminstruktionen |
| 326 | Speicher |
| 334 | Kommunikationsschnittstelle |
| 340 | Netzwerk |
| 350 | Computersystem |
| 352 | Prozessor |
| 354 | Programminstruktionen |
| 356 | Speicher |
| 364 | Kommunikationsschnittstelle |
| 366 | Sensor |

**Patentansprüche**

1. Verfahren zum manipulationssicheren Speichern von Daten (310, 248) in einem elektronischen Speicher (306) unter Verwendung einer bidirektional verketteten Blockchain-Struktur (100, 312), welche zumindest einen ersten und einen letzten Block (102, 110) umfasst, wobei das Verfahren umfasst:

   • Bereitstellen einer bidirektional verketteten Blockchain-Struktur (100, 312),
   • Bereitstellen der zu speichernden Daten (310, 248),
   • Erzeugen eines zusätzlichen Blocks (112) zum Erweitern der Blockchain-Struktur (100, 312), welcher die zu speichernden Daten (310, 248) umfasst und dazu vorgesehen ist mit dem letzten Block (110) der Blockchain-Struktur (100, 312) bidirektional verkettet zu werden, wobei der letzte Block (110) der Blockchain-Struktur (100, 312) gespeicherte Daten (228) umfasst,

• Berechnen eines ersten Prüfwerts (224) des letzten Blocks (110) zum bidirektional Verketten des zusätzlichen Blocks (112) mit dem letzten Block (110) der Blockchain-Struktur (100, 312), wobei der erste Prüfwert (224) des letzten Blocks (110) unter Verwendung eines ersten Hashwerts berechnet wird, dessen Berechnung ein Anwenden einer Hashfunktion (308) auf die in dem letzten Block (110) gespeicherten Daten (228) und die in dem zusätzlichen Block (112) zu speichernden Daten (310, 248) umfasst,

• Berechnen eines Prüfwerts (224, 242) des zusätzlichen Blocks (112) zum bidirektional Verketten des zusätzlichen Blocks (112) mit dem letzten Block (110) der Blockchain-Struktur (100, 312), wobei der Prüfwert (224, 242) des zusätzlichen Blocks (112) unter Verwendung eines zweiten Hashwerts berechnet wird, dessen Berechnung ein Anwenden der Hashfunktion (308) auf die in dem letzten Block (110) gespeicherten Daten (228) und die auf die in dem zusätzlichen Block (112) zu speichernden Daten (310, 248) umfasst,

• Hinzufügen des ersten Prüfwerts (224) des letzten Blocks zu dem letzten Block (110),

• Hinzufügen des Prüfwerts (224, 242) des zusätzlichen Blocks zu dem zusätzlichen Block (112),

• Speichern der um den zusätzlichen Block (112) erweiterten Blockchain-Struktur (100, 312).

2. Verfahren nach Anspruch 1, wobei der letzte Block (110) der Blockchain-Struktur (100, 312) einen zweiten Prüfwert (222) des letzten Blocks (110) umfasst, welcher den letzten Block (110) bidirektional mit einem vorletzten Block (108) der Blockchain-Struktur (100, 312) verkettet, wobei der zweite Prüfwert (222) des letzten Blocks (110) unter Verwendung eines dritten Hashwerts berechnet wurde, dessen Berechnung ein Anwenden der Hashfunktion (308) auf in dem vorletzten Block (108) gespeicherte Daten und die in dem letzten Block (110) gespeicherten Daten (228) umfasst,

wobei das Verfahren vorzugsweise ferner umfasst:

• Berechnen eines kombinierten Prüfwerts (226) des letzten Blocks (110), wobei der kombinierte Prüfwert (226) des letzten Blocks (110) unter Verwendung eines vierten Hashwerts berechnet wird, dessen Berechnung ein Anwenden der Hashfunktion (308) auf eine Kombination aus dem ersten und dem zweiten Prüfwert (224, 222) des letzten Blocks (110) umfasst,

• Hinzufügen des kombinierten Prüfwerts (226) des letzten Blocks zu dem letzten Block (110) der Blockchain-Struktur (100, 312),

wobei der kombinierte Prüfwert $KPW_N$ (226) des letzten Blocks (110) vorzugsweise wie folgt berechnet wird:

$$KPW_N = Hash\{PW_{N-1} + PW_N\},$$

wobei $PW_{N-1}$ den zweiten Prüfwert (222) des letzten Blocks (110) und $PW_N$ den ersten Prüfwert (224) des letzten Blocks (110) bezeichnet.

3. Verfahren nach einem der vorangehenden Ansprüche, wobei der letzte Block (110) einen Platzhalter (223) umfasst, welcher den letzten Block (110) als letzten Block der Blockchain-Struktur (100, 312) kennzeichnet, wobei das Hinzufügen des ersten Prüfwerts (224) des letzten Blocks zu dem letzten Block (110) umfasst:
Ersetzen des Platzhalters (223) des letzten Blocks (110) durch den ersten Prüfwerts (224) des letzten Blocks (100).

4. Verfahren nach einem der vorangehenden Ansprüche, wobei der zusätzliche Block (112) einen Platzhalter (243) umfasst, welcher den zusätzlichen Block (112) als letzten Block der erweiterten Blockchain-Struktur (100, 312) kennzeichnet.

5. Verfahren nach Anspruch 4, wobei das Verfahren ferner umfasst:

• Berechnen eines kombinierten Prüfwerts (246) des zusätzlichen Blocks (112), wobei der kombinierte Prüfwert (246) des zusätzlichen Blocks (112) unter Verwendung eines fünften Hashwerts berechnet wird, dessen Berechnung ein Anwenden der Hashfunktion (308) auf eine Kombination aus dem Prüfwert (224, 242) des zusätzlichen Blocks (112) und dem Platzhalter (243) des zusätzlichen Blocks (112) umfasst,

• Hinzufügen des kombinierten Prüfwerts (246) des zusätzlichen Blocks zu dem zusätzlichen Block (112) der Blockchain-Struktur (100, 312),

wobei der kombinierte Prüfwert $KPW_{N+1}$ (246) des zusätzlichen Blocks (112) vorzugsweise wie folgt berechnet wird:

$$KPW_{N+1} = Hash\{PW_N + PH_{N+1}\},$$

wobei $PW_N$ den Prüfwert (224, 242) des zusätzlichen Blocks (112) und $PH_{N+1}$ den Platzhalter (243) des zusätzlichen Blocks (112) bezeichnet.

6. Verfahren nach einem der vorangehenden Ansprüche, wobei der erste Block (102) der Blockchain-Struktur (100, 312) einen Platzhalter (201) umfasst, welcher den ersten Block (102) als ersten Block der Blockchain-Struktur (100, 312) kennzeichnet.

7. Verfahren nach einem der vorangehenden Ansprüche, wobei die Blöcke der Blockchain-Struktur (100, 312) jeweils eine quadratische (MxM)-Matrixstruktur aufweisen, wobei M eine natürliche Zahl größer-gleich zwei ist, wobei die gespeicherten Daten (310, 208, 228, 248) der Blöcke (102, 104, 106, 108, 110, 112) der Blockchain-Struktur (100, 312) vorzugsweise jeweils von Einträgen einer quadratischen Untermatrix der Matrixstruktur des entsprechenden Blocks (102, 104, 106, 108, 110, 112) umfasst werden.

8. Verfahren nach einem der vorangehenden Ansprüche, wobei das Berechnen des ersten Prüfwerts (224) des letzten Blocks (110) und das Berechnen des Prüfwerts (224, 242) des zusätzlichen Blocks (112) umfassen:

   • Berechnen einer Kombination aus den in dem letzten Block (110) gespeicherten Daten (228) und den in dem zusätzlichen Block (112) gespeicherten Daten (310, 248),
   • Berechnen eines Hashwerts der Kombination aus den in dem letzten Block (110) gespeicherten Daten (228) und den in dem zusätzlichen Block (112) gespeicherten Daten (310, 248),
   • Aufteilen des Hashwerts der Kombination aus den in dem letzten Block (110) gespeicherten Daten (228) und den in dem zusätzlichen Block (112) gespeicherten Daten (310, 248), in einen ersten Teil und einen zweiten Teil, wobei der erste Prüfwert (224) des letzten Blocks (110) den ersten Teil umfasst und wobei der Prüfwert (224, 242) des zusätzlichen Blocks (112) den zweiten Teil umfasst.

9. Verfahren nach Anspruch 8, wobei die Kombination aus den in dem letzten Block (110) gespeicherten Daten (228) und den in dem zusätzlichen Block (112) gespeicherten Daten (310, 248) ein Produkt der Untermatrix des letzten Blocks, deren Einträge die in dem letzten Block (110) gespeichert Daten (228) umfassen, und der Untermatrix des vorletzten Blocks (110) umfasst, deren Einträge die in dem zusätzlichen Block (112) zu speichernden Daten (310, 248) umfassen, und/oder wobei das Berechnen des zweiten Prüfwerts (222) des letzten Blocks (110) umfasst:

   • Berechnen einer Kombination aus den in einem vorletzten Block (108) der Blockchain-Struktur (100, 312) gespeicherten Daten und den in dem letzten Block (110) gespeicherten Daten (228),
   • Berechnen eines Hashwerts der Kombination aus den in dem vorletzten Block (108) gespeicherten Daten und den in dem letzten Block (110) gespeicherten Daten (228),
   • Aufteilen des Hashwerts der Kombination aus den in dem vorletzten Block (108) gespeicherten Daten und den in dem letzten Block (110) gespeicherten Daten (228), in einen ersten Teil und einen zweiten Teil, wobei ein Prüfwert des vorletzten Blocks (108) den ersten Teil umfasst und wobei der zweite Prüfwert (222) des letzten Blocks (110) den zweiten Teil umfasst.

10. Verfahren nach einem der Ansprüche 1 bis 7, wobei der erste Prüfwert des letzten Blocks (110) und der Prüfwert (224, 242) des zusätzlichen Blocks (112) identisch sind, wobei der erste Prüfwert $PW_N$ (224) des letzten Blocks (110) vorzugsweise wie folgt berechnet wird:

$$PW_N = Hash\{D_{N+1} + Hash[D_N + PW_{N-1}]\},$$

wobei $D_{N+1}$ die zu speichernden Daten (310, 248) des zusätzlichen Blocks (112), $D_N$ die gespeicherten Daten (228) des letzten Blocks (110) und $PW_{N-1}$ den zweiten Prüfwert (222) des letzten Blocks (110) bezeichnet, wobei der zweite Prüfwert $PW_{N-1}$ (222) des letzten Blocks (110) vorzugsweise wie folgt berechnet wurde:

$$PW_{N-1} = Hash\{D_N + Hash[D_{N-1} + PW_{N-2}]\},$$

wobei $D_N$ die gespeicherten Daten (228) des letzten Blocks (110), $D_{N-1}$ die gespeicherten Daten des vorletzten Blocks (112) und $PW_{N-2}$ einen Prüfwert des vorletzten Blocks (112) bezeichnet.

11. Verfahren nach einem der vorangehenden Ansprüche, wobei aufeinanderfolgende Blöcke der bidirektional verketteten Blockchain-Struktur (100, 312) jeweils bidirektional miteinander verkettet sind, wobei jeweils der vorangehende Block zweier aufeinanderfolgender folgende Blöcke einen Prüfwert des vorangehende Blocks umfasst, welcher unter Verwendung von Daten des vorangehenden Blocks und von Daten des nachfolgenden Blocks berechnet wurde, und der nachfolgende Block der aufeinanderfolgender folgenden Blöcke einen Prüfwert des nachfolgenden Blocks umfasst, welcher unter Verwendung von Daten des vorangehenden Blocks und von Daten des nachfolgenden Blocks berechnet wurde.

12. Verfahren nach einem der vorangehenden Ansprüche, wobei die zu speichernden Daten (310, 248) Daten umfassen, welche kennzeichnend für den Inhalt eines digital codierten Dokuments sind, wobei das Bereitstellen der zu speichernden Daten (310, 248) ein Empfangen der Daten mittels einer Kommunikationsschnittstelle (314) über ein Netzwerk (340) von einem das digital codierte Dokument erstellenden Computersystem (350) umfasst, wobei das Verfahren ferner umfasst:

   • Empfangen einer Anfrage nach einer aktuellen Version der Blockchain-Struktur (100, 312) mittels der Kommunikationsschnittstelle (314) über das Netzwerk (340) von einem anfragenden Computersystem (320),
   • Versenden der erweiterten Blockchain-Struktur (100, 312) mittels der Kommunikationsschnittstelle (314) über das Netzwerk (340) an das anfragende Computersystem (320) in Antwort auf die empfangene Anfrage, oder

   wobei die zu speichernden Daten (310, 248) Daten einer Transaktion umfassen, wobei das Bereitstellen der zu speichernden Daten (310, 248) ein Empfangen der Daten mittels einer Kommunikationsschnittstelle (314) über ein Netzwerk (340) von einem an der Ausführung der Transaktion beteiligten Computersystem (350) umfasst, wobei das Verfahren ferner umfasst:

   • Empfangen einer Anfrage nach einer aktuellen Version der Blockchain-Struktur (100, 312) mittels der Kommunikationsschnittstelle (314) über das Netzwerk (340) von einem anfragenden Computersystem (320),
   • Versenden der erweiterten Blockchain-Struktur (100, 312) mittels der Kommunikationsschnittstelle (314) über das Netzwerk (340) an das anfragende Computersystem (320) in Antwort auf die empfangene Anfrage, oder

   wobei die zu speichernden Daten (310, 248) Zustandsdaten einer Vorrichtung umfassen, wobei das Bereitstellen der zu speichernden Daten ein Empfangen der Daten (310, 248) mittels einer Kommunikationsschnittstelle (314) über ein Netzwerk (340) von einem die Zustandsdaten mittels eines Sensors (366) erfassenden Computersystem (350) umfasst, wobei das Verfahren ferner umfasst:

   • Empfangen einer Anfrage nach einer aktuellen Version der Blockchain-Struktur (100, 312) mittels der Kommunikationsschnittstelle (314) über das Netzwerk (340) von einem anfragenden Computersystem (320),
   • Versenden der erweiterten Blockchain-Struktur (100, 312) mittels der Kommunikationsschnittstelle (314) über das Netzwerk (340) an das anfragende Computersystem (320) in Antwort auf die empfangene Anfrage.

13. Verfahren nach einem der Ansprüche 1 bis 11, wobei die zu speichernden Daten (310, 248) Daten umfassen, welche einen Bearbeitungsvorgang eines digital codierten Dokuments kennzeichnen, wobei das Bereitstellen der Blockchain-Struktur (100, 312) ein Empfangen des zu bearbeitenden Dokuments, welches die Blockchain-Struktur (100, 312) umfasst, und ein Auslesen der Blockchain-Struktur (100, 312) aus dem empfangenen Dokument umfasst, wobei das Bereitstellen der zu speichernden Daten (310, 248) ein Bearbeiten des empfangenen Dokuments und ein Erzeugen der Daten umfasst, wobei das Speichern der erweiterten Blockchain-Struktur (100, 312) ein Hinzufügen der erweiterten Blockchain-Struktur (100, 312) zu dem bearbeiteten Dokument und ein Speichern des bearbeiteten Dokuments mit der erweiterten Blockchain-Struktur (100, 312) umfasst, wobei das Verfahren vorzugsweise ferner umfasst:

   • Empfangen einer Anfrage nach dem bearbeiteten Dokument mittels einer Kommunikationsschnittstelle (314) über ein Netzwerk (340) von einem anfragenden Computersystem (320),
   • Versenden des bearbeiteten Dokuments mit der erweiterten Blockchain-Struktur (100, 312) mittels der Kommunikationsschnittstelle (314) über das Netzwerk (340) an das anfragende Computersystem (320) in Antwort auf die empfangene Anfrage.

14. Elektronisches Datenspeichersystem (300) zum manipulationssicheren Speichern von Daten (310, 248) in einer bidirektional verketteten Blockchain-Struktur (100, 312), welche zumindest einen ersten und einen letzten Block umfasst, wobei das Datenspeichersystem (300) einen Prozessor (302) und einen elektronischen Speicher (306) mit maschinenlesbaren Instruktionen (304) umfasst, wobei ein Ausführen der maschinenlesbaren Instruktionen (304) durch den Prozessor (302) das Datenspeichersystem (300) dazu veranlasst, das Verfahren aus Anspruch 1 auszuführen.

15. Telekommunikationssystem, welches ein elektronisches Datenspeichersystem (300) nach Anspruch 14 und eine Kommunikationsschnittstelle (314) zum Kommunizieren über ein Netzwerk (340) umfasst,
wobei das Bereitstellen der zu speichernden Daten (310, 248) ein Empfangen der Daten mittels einer Kommunikationsschnittstelle (314) über ein Netzwerk (340) umfasst, wobei das Telekommunikationssystem ferner Mittel umfasst zur Ausführung von:

• Empfangen einer Anfrage nach einer aktuellen Version der Blockchain-Struktur (100, 312) mittels der Kommunikationsschnittstelle (314) über das Netzwerk (340) von einem anfragenden Telekommunikationssystem (320),
• Versenden der erweiterten Blockchain-Struktur (100, 312) mittels der Kommunikationsschnittstelle (314) über das Netzwerk (340) an das anfragende Telekommunikationssystem (320) in Antwort auf die empfangene Anfrage, oder

wobei die zu speichernden Daten (310, 248) Daten umfassen, welche einen Bearbeitungsvorgang eines digital codierten Dokuments kennzeichnen, wobei das Bereitstellen der Blockchain-Struktur (100, 312) ein Empfangen des zu bearbeitenden Dokuments, welches die Blockchain-Struktur (100, 312) umfasst, und ein Auslesen der Blockchain-Struktur (100, 312) aus dem empfangenen Dokument umfasst, wobei das Bereitstellen der zu speichernden Daten (310, 248) ein Bearbeiten des empfangenen Dokuments und ein Erzeugen der Daten umfasst, wobei das Speichern der erweiterten Blockchain-Struktur (100, 312) ein Hinzufügen der erweiterten Blockchain-Struktur (100, 312) zu dem bearbeiteten Dokument und ein Speichern des bearbeiteten Dokuments mit der erweiterten Blockchain-Struktur (100, 312) umfasst, wobei das Telekommunikationssystem ferner Mittel umfasst zur Ausführung von:

• Empfangen einer Anfrage nach dem bearbeiteten Dokument mittels der Kommunikationsschnittstelle (314) über das Netzwerk (340) von einem anfragenden Telekommunikationssystem (320),
• Versenden des bearbeiteten Dokuments mit der erweiterten Blockchain-Struktur (100, 312) mittels der Kommunikationsschnittstelle (314) über das Netzwerk (340) an das anfragende Telekommunikationssystem (320) in Antwort auf die empfangene Anfrage.

**Claims**

1. A method for the tamper-proof storing of data (310, 248) in an electronic memory (306) using a bidirectionally linked blockchain structure (100, 312) which comprises at least a first and a last block (102, 110), wherein the method comprises the steps of:

• providing a bidirectionally linked blockchain structure (100, 312),
• providing the data (310, 248) to be stored,
• generating an additional block (112) to extend the blockchain structure (100, 312), which block comprises the data to be stored (310, 248) and is intended to be bidirectionally linked to the last block (110) of the blockchain structure (100, 312), wherein the last block (110) of the blockchain structure (100, 312) comprises stored data (228),
• calculating a first check value (224) of the last block (110) for bidirectionally linking the additional block (112) to the last block (110) of the blockchain structure (100, 312), wherein the first check value (224) of the last block (110) is calculated using a first hash value, the calculation of which comprises applying a hash function (308) to the data (228) stored in the last block (110) and the data (310, 248) to be stored in the additional block (112),
• calculating a check value (224, 242) of the additional block (112) for bidirectionally linking the additional block (112) to the last block (110) of the blockchain structure (100, 312), wherein the check value (224, 242) of the additional block (112) is calculated using a second hash value, the calculation of which comprises applying the hash function (308) to the data (228) stored in the last block (110) and the data (310, 248) to be stored in the additional block (112),
• adding the first check value (224) of the last block to the last block (110),

- adding the check value (224, 242) of the additional block to the additional block (112),
- storing the blockchain structure (100, 312) extended by the additional block (112).

2. The method according to claim 1, wherein the last block (110) of the blockchain structure (100, 312) comprises a second check value (222) of the last block (110), which links the last block (110) bidirectionally to a penultimate block (108) of the blockchain structure (100, 312), wherein the second check value (222) of the last block (110) was calculated using a third hash value, the calculation of which comprises applying the hash function (308) to data stored in the penultimate block (108) and the data (228) stored in the last block (110), wherein the method also preferably comprises the steps of:

- calculating a combined check value (226) of the last block (110), wherein the combined check value (226) of the last block (110) is calculated using a fourth hash value, the calculation of which comprises applying the hash function (308) to a combination of the first and second check values (224, 222) of the last block (110),
- adding the combined check value (226) of the last block to the last block (110) of the blockchain structure (100, 312),

wherein the combined check value $KPW_N$ (226) of the last block (110) is preferably calculated as follows:

$$KPW_N = Hash(PW_{N-1} + PW_N),$$

wherein $PW_{N-1}$ denotes the second check value (222) of the last block (110) and $PW_N$ denotes the first check value (224) of the last block (110).

3. The method according to one of the preceding claims, wherein the last block (110) comprises a placeholder (223), which identifies the last block (110) as the last block of the blockchain structure (100, 312), wherein the addition of the first check value (224) of the last block to the last block (110) comprises:
replacing the placeholder (223) of the last block (110) with the first check value (224) of the last block (100).

4. The method according to one of the preceding claims, wherein the additional block (112) comprises a placeholder (243) which identifies the additional block (112) as the last block of the expanded blockchain structure (100, 312).

5. The method according to claim 4, wherein the method also comprises the steps of:

- calculating a combined check value (246) of the additional block (112), wherein the combined check value (246) of the additional block (112) is calculated using a fifth hash value, the calculation of which comprises applying the hash function (308) to a combination of the check value (224, 242) of the additional block (112) and the placeholder (243) of the additional block (112),
- adding the combined check value (246) of the additional block to the additional block (112) of the blockchain structure (100, 312),

wherein the combined check value $KPW_{N+1}$ (246) of the additional block (112) is preferably calculated as follows:

$$KPW_{N+1} = Hash\{PW_N + PH_{N+1}\},$$

wherein $PW_N$ denotes the check value (224, 242) of the additional block (112) and $PH_{N+1}$ denotes the placeholder (243) of the additional block (112).

6. The method according to one of the preceding claims, wherein the first block (102) of the blockchain structure (100, 312) comprises a placeholder (201) which identifies the first block (102) as the first block of the blockchain structure (100, 312).

7. The method according to one of the preceding claims, wherein the blocks of the blockchain structure (100, 312) each have a square (M×M) matrix structure, wherein M is a natural number greater than or equal to two, wherein the stored data (310, 208, 228, 248) of the blocks (102, 104, 106, 108, 110, 112) of the blockchain structure (100, 312) are in each case preferably encompassed by entries of a square submatrix of the matrix structure of the corresponding block (102, 104, 106, 108, 110, 112).

8. The method according to one of the preceding claims, wherein the calculation of the first check value (224) of the last block (110) and the calculation of the check value (224, 242) of the additional block (112) comprise:

   • calculating a combination of the data (228) stored in the last block (110) and of the data (310, 248) stored in the additional block (112),
   • calculating a hash value of the combination of the data (228) stored in the last block (110) and of the data (310, 248) stored in the additional block (112),
   • dividing the hash value of the combination of the data (228) stored in the last block (110) and of the data (310, 248) stored in the additional block (112) into a first portion and a second portion, wherein the first check value (224) of the last block (110) comprises the first portion, and wherein the check value (224, 242) of the additional block (112) comprises the second portion.

9. The method according to claim 8, wherein the combination of the data (228) stored in the last block (110) and of the data (310, 248) stored in the additional block (112) comprises a product of the submatrix of the last block, the entries of which comprise the data (228) stored in the last block (110), and of the submatrix of the penultimate block (110), the entries of which comprise the data (310, 248) to be stored in the additional block (112), and/or wherein the calculation of the second check value (222) of the last block (110) comprises:

   • calculating a combination of the data stored in a penultimate block (108) of the blockchain structure (100, 312) and of the data (228) stored in the last block (110),
   • calculating a hash value of the combination of the data stored in the penultimate block (108) and of the data (228) stored in the last block (110),
   • dividing the hash value of the combination of the data stored in the penultimate block (108) and of the data (228) stored in the last block (110) into a first portion and a second portion, wherein a check value of the penultimate block (108) comprises the first portion, and wherein the second check value (222) of the last block (110) comprises the second portion.

10. The method according to one of claims 1 to 7, wherein the first check value of the last block (110) and the check value (224, 242) of the additional block (112) are identical, wherein the first check value $PW_N$ (224) of the last block (110) is preferably calculated as follows:

$$PW_N = Hash\{D_{N+1} + Hash[D_N + PW_{N-1}]\},$$

wherein $D_{N+1}$ denotes the data (310, 248) to be stored of the additional block (112), $D_N$ denotes the stored data (228) of the last block (110) and $PW_{N-1}$ denotes the second check value (222) of the last block (110), wherein the second check value $PW_{N-1}$ (222) of the last block (110) was preferably calculated as follows:

$$PW_{N-1} = Hash\{D_N + Hash[D_{N-1} + PW_{N-2}]\},$$

wherein $D_N$ denotes the stored data (228) of the last block (110), $D_{N-1}$ denotes the stored data of the penultimate block (112) and $PW_{N-2}$ denotes a check value of the penultimate block (112).

11. The method according to one of the preceding claims, wherein consecutive blocks of the bidirectionally linked blockchain structure (100, 312) are each bidirectionally linked to one another, wherein in each case the preceding block of two consecutive blocks comprises a check value of the preceding block, which was calculated using data of the preceding block and data of the subsequent block, and the subsequent block of the consecutive blocks comprises a check value of the subsequent block, which was calculated using data of the preceding block and data of the subsequent block.

12. The method according to one of the preceding claims, wherein the data (310, 248) to be stored comprise data which are characterising for the content of a digitally coded document, wherein the provision of the data (310, 248) to be stored comprises a receipt of the data by means of a communications interface (314) via a network (340) from a computer system (350) creating the digitally coded document, wherein the method also comprises the steps of:

• receiving a request for a current version of the blockchain structure (100, 312) by means of the communications interface (314) via the network (340) from a requesting computer system (320),
• sending the extended blockchain structure (100, 312) by means of the communications interface (314) via the network (340) to the requesting computer system (320) in response to the received request, or

wherein the data (310, 248) to be stored comprise data relating to a transaction,
wherein the provision of the data (310, 248) to be stored comprises a receipt of the data by means of a communications interface (314) via a network (340) from a computer system (350) involved in the execution of the transaction, wherein the method also comprises the steps of:

• receiving a request for a current version of the blockchain structure (100, 312) by means of the communications interface (314) via the network (340) from a requesting computer system (320),
• sending the extended blockchain structure (100, 312) by means of the communications interface (314) via the network (340) to the requesting computer system (320) in response to the received request, or

wherein the data (310, 248) to be stored comprise status data of a device, wherein the provision of the data to be stored comprises a receipt of the data (310, 248) by means of a communications interface (314) via a network (340) from a computer system (350) detecting the status data by means of a sensor (366), wherein the method also comprises the steps of:

• receiving a request for a current version of the blockchain structure (100, 312) by means of the communications interface (314) via the network (340) from a requesting computer system (320),
• sending the extended blockchain structure (100, 312) by means of the communications interface (314) via the network (340) to the requesting computer system (320) in response to the received request.

13. The method according to one of claims 1 to 11, wherein the data (310, 248) to be stored comprise data which characterise a processing procedure of a digitally coded document, wherein the provision of the blockchain structure (100, 312) comprises a receipt of the document to be processed which comprises the blockchain structure (100, 312) and a reading of the blockchain structure (100, 312) from the received document, wherein the provision of the data (310, 248) to be stored comprises a processing of the received document and a generation of the data, wherein the storing of the extended blockchain structure (100, 312) comprises an addition of the extended blockchain structure (100, 312) to the processed document and a storing of the processed document with the extended blockchain structure (100, 312),
wherein the method also preferably comprises the steps of:

• receiving a request for the processed document by means of a communications interface (314) via a network (340) from a requesting computer system (320),
• sending the processed document with the extended blockchain structure (100, 312) by means of the communications interface (314) via the network (340) to the requesting computer system (320) in response to the received request.

14. An electronic data storage system (300) for tamper-proof storing of data (310, 248) in a bidirectionally linked blockchain structure (100, 312) which comprises at least a first and a last block, wherein the data storage system (300) comprises a processor (302) and an electronic memory (306) with machine-readable instructions (304), wherein an execution of the machine-readable instructions (304) by the processor (302) prompts the data storage system (300) to carry out the method from claim 1.

15. A telecommunications system which comprises an electronic data storage system (300) according to claim 14 and a communications interface (314) for communicating via a network (340),
wherein the provision of the data (310, 248) to be stored comprises a receipt of the data by means of a communications interface (314) via a network (340), wherein the telecommunications system also comprises means for carrying out the following:

• receiving a request for a current version of the blockchain structure (100, 312) by means of the communications interface (314) via the network (340) from a requesting telecommunications system (320),
• sending the extended blockchain structure (100, 312) by means of the communications interface (314) via the network (340) to the requesting telecommunications system (320) in response to the received request, or

wherein the data (310, 248) to be stored comprise data which characterise a processing procedure of a digitally coded document, wherein the provision of the blockchain structure (100, 312) comprises a receipt of the document to be processed which comprises the blockchain structure (100, 312) and a reading of the blockchain structure (100, 312) from the received document, wherein the provision of the data (310, 248) to be stored comprises a processing of the received document and a generation of the data, wherein the storing of the extended blockchain structure (100, 312) comprises an addition of the extended blockchain structure (100, 312) to the processed document and a storing of the processed document with the extended blockchain structure (100, 312), wherein the telecommunications system also comprises means for carrying out the following:

- receiving a request for the processed document by means of the communications interface (314) via the network (340) from a requesting telecommunications system (320),
- sending the processed document with the extended blockchain structure (100, 312) by means of the communications interface (314) via the network (340) to the requesting telecommunications system (320) in response to the received request.

## Revendications

1. Procédé de stockage de données (310, 248) de manière sécurisée contre des manipulations dans une mémoire (306) électronique moyennant l'emploi d'une structure de chaîne de blocs (100, 312) concaténée de manière bidirectionnelle, laquelle comprend au moins un premier et un dernier bloc (102, 110), le procédé comprenant :

   - la préparation d'une structure de chaîne de blocs (100, 312) concaténée de manière bidirectionnelle,
   - la préparation des données (310, 248) devant être stockées,
   - la création d'un bloc supplémentaire (112) permettant d'élargir la structure de chaîne de blocs (100, 312), lequel comprend les données (310, 248) devant être stockées et est prévu pour être concaténé de manière bidirectionnelle avec le dernier bloc (110) de la structure de chaîne de blocs (100, 312), où le dernier bloc (110) de la structure de chaîne de blocs (100, 312) comprend des données (228) stockées,
   - le calcul d'une première valeur de contrôle (224) du dernier bloc (110) pour la concaténation de manière bidirectionnelle du bloc supplémentaire (112) avec le dernier bloc (110) de la structure de chaîne de blocs (100, 312), où la première valeur de contrôle (224) du dernier bloc (110) est calculée moyennant l'emploi d'une première valeur de hachage, dont le calcul comprend une application d'une fonction de hachage (308) aux données (228) stockées dans le dernier bloc (110) et aux données (310, 248) devant être stockées dans le bloc supplémentaire (112),
   - le calcul d'une valeur de contrôle (224, 242) du bloc supplémentaire (112) pour la concaténation de manière bidirectionnelle du bloc supplémentaire (112) avec le dernier bloc (110) de la structure de chaîne de blocs (100, 312), où la valeur de contrôle (224, 242) du bloc supplémentaire (112) est calculée moyennant l'emploi d'une deuxième valeur de hachage, dont le calcul comprend une application de la fonction de hachage (308) aux données (228) stockées dans le dernier bloc (110) et aux données (310, 248) devant être stockées dans le bloc supplémentaire (112),
   - l'ajout de la première valeur de contrôle (224) du dernier bloc au dernier bloc (110),
   - l'ajout de la valeur de contrôle (224, 242) du bloc supplémentaire au bloc supplémentaire (112),
   - le stockage de la structure de chaîne de blocs (100, 312) élargie avec le bloc supplémentaire (112).

2. Procédé selon la revendication 1, dans lequel le dernier bloc (110) de la structure de chaîne de blocs (100, 312) comprend une deuxième valeur de contrôle (222) du dernier bloc (110), laquelle fait la concaténation de manière bidirectionnelle du dernier bloc (110) avec l'avant-dernier bloc (108) de la structure de chaîne de blocs (100, 312), où la deuxième valeur de contrôle (222) du dernier bloc (110) a été calculée moyennant l'emploi d'une troisième valeur de hachage, dont le calcul comprend une application de la fonction de hachage (308) à des données stockées dans l'avant-dernier bloc (108) et aux données (228) stockées dans le dernier bloc (110), le procédé comprenant en outre, de préférence :

   - le calcul d'une valeur de contrôle combinée (226) du dernier bloc (110), où la valeur de contrôle combinée (226) du dernier bloc (110) est calculée moyennant l'emploi d'une quatrième valeur de hachage, dont le calcul comprend une application de la fonction de hachage (308) à une combinaison des première et deuxième valeurs de contrôle (224, 222) du dernier bloc (110),
   - l'ajout de la valeur de contrôle combinée (226) du dernier bloc au dernier bloc (110) de la structure de chaîne de blocs (100, 312),

dans lequel la valeur de contrôle combinée $KPW_N$ (226) du dernier bloc (110) est de préférence calculée comme suit :

$$KPW_N = Hash \{PW_{N-1} + PW_N\},$$

où $PW_{N-1}$ désigne la deuxième valeur de contrôle (222) du dernier bloc (110) et $PW_N$ désigne la première valeur de contrôle (224) du dernier bloc (110).

3. Procédé selon l'une des revendications précédentes, dans lequel le dernier bloc (110) comprend un élément de substitution (223), lequel définit le dernier bloc (110) comme étant le dernier bloc de la structure de chaîne de blocs (100, 312), où l'ajout de la première valeur de contrôle (224) du dernier bloc au dernier bloc (110) comprend :
le remplacement de l'élément de substitution (223) du dernier bloc (110) par la première valeur de contrôle (224) du dernier bloc (100).

4. Procédé selon l'une des revendications précédentes, dans lequel le bloc supplémentaire (112) comprend un élément de substitution (243), lequel définit le bloc supplémentaire (112) comme étant le dernier bloc de la structure de chaîne de blocs (100, 312) élargie.

5. Procédé selon la revendication 4, le procédé comprenant en outre :

• le calcul d'une valeur de contrôle combinée (246) du bloc supplémentaire (112), où la valeur de contrôle combinée (246) du bloc supplémentaire (112) est calculée moyennant l'emploi d'une cinquième valeur de hachage, dont le calcul comprend une application de la fonction de hachage (308) à une combinaison à base de la valeur de contrôle (224, 242) du bloc supplémentaire (112) et de l'élément de substitution (243) du bloc supplémentaire (112),
• l'ajout de la valeur de contrôle combinée (246) du bloc supplémentaire au bloc supplémentaire (112) de la structure de chaine de blocs (100, 312),
dans lequel la valeur de contrôle combinée $KPW_{N+1}$ (246) du bloc supplémentaire (112) est de préférence calculée comme suit :

$$KPW_{N+1} = Hash\{PW_N + PH_{N+1}\},$$

où $PW_N$ désigne la valeur de contrôle (224, 242) du bloc supplémentaire (112) et $PH_{N+1}$ désigne l'élément de substitution (243) du bloc supplémentaire (112).

6. Procédé selon l'une des revendications précédentes, dans lequel le premier bloc (102) de la structure de chaine de blocs (100, 312) comprend un élément de substitution (201), lequel définit le premier bloc (102) comme étant le premier bloc de la structure de chaîne de blocs (100, 312).

7. Procédé selon l'une des revendications précédentes, dans lequel les blocs de la structure de chaîne de blocs (100, 312) présentent respectivement une structure de matrice quadratique (MxM), où M est un nombre naturel supérieur ou égal à deux,
dans lequel les données stockées (310, 208, 228, 248) des blocs (102, 104, 106, 108, 110, 112) de la structure de chaîne de blocs (100, 312) sont compris de préférence respectivement par des entrées d'une sous-matrice quadratique de la structure matricielle du bloc (102, 104, 106, 108, 110, 112) correspondant.

8. Procédé selon l'une des revendications précédentes, dans lequel le calcul de la première valeur de contrôle (224) du dernier bloc (110) et le calcul de la valeur de contrôle (224, 242) du bloc supplémentaire (112) comprennent :

• le calcul d'une combinaison à base des données (228) stockées dans le dernier bloc (110) et des données (310, 248) stockées dans le bloc supplémentaire (112),
• le calcul d'une valeur de hachage de la combinaison à base des données (228) stockées dans le dernier bloc (110) et des données (310, 248) stockées dans le bloc supplémentaire (112),
• la subdivision de la valeur de hachage de la combinaison à base des données (228) stockées dans le dernier bloc (110) et des données (310, 248) stockées dans le bloc supplémentaire (112) en une première et une deuxième partie, où la première valeur de contrôle (224) du dernier bloc (110) comprend la première partie et où la valeur de contrôle (224, 242) du bloc supplémentaire (112) comprend la deuxième partie.

9. Procédé selon la revendication 8, dans lequel la combinaison à base des données (228) stockées dans le dernier bloc (110) et des données (310, 248) stockées dans le bloc supplémentaire (112) comprend un produit de la sous-matrice du dernier bloc dont les entrées comprennent les données (228) stockées dans le dernier bloc (110) et de la sous-matrice de l'avant-dernier bloc (110), dont les entrées comprennent les données (310, 248) devant être stockées dans le bloc supplémentaire (112), et/ou
dans lequel le calcul de la deuxième valeur de contrôle (222) du dernier bloc (110) comprend :

   • le calcul d'une combinaison à base des données stockées dans un avant-dernier bloc (108) de la structure de chaîne de blocs (100, 312) et des données (228) stockées dans le dernier bloc (110),
   • le calcul d'une valeur de hachage de la combinaison à base des données stockées dans l'avant-dernier bloc (108) et des données (228) stockées dans le dernier bloc (110),
   • la subdivision de la valeur de hachage de la combinaison à base des données stockées dans l'avant-dernier bloc (108) et des données (228) stockées dans le dernier bloc (110) en une première et une deuxième partie, où une valeur de contrôle de l'avant-dernier bloc (108) comprend la première partie et où la deuxième valeur de contrôle (222) du dernier bloc (110) comprend la deuxième partie.

10. Procédé selon l'une des revendications 1 à 7, dans lequel la première valeur de contrôle du dernier bloc (110) et la valeur de contrôle (224, 242) du bloc supplémentaire (112) sont identiques,
dans lequel la première valeur de contrôle $PW_N$ (224) du dernier bloc (110) est de préférence calculée comme suit :

$$PW_N = Hash\{D_{N+1} + Hash[D_N + PW_{N-1}]\},$$

où $D_{N+1}$ désigne les données (310, 248) du bloc supplémentaire (112) devant être stockées, $D_N$ désigne les données (228) stockées du dernier bloc (110) et $PW_{N-1}$ désigne la deuxième valeur de contrôle (222) du dernier bloc (110), dans lequel la deuxième valeur de contrôle $PW_{N-1}$ (222) du dernier bloc (110) a été de préférence calculée comme suit :

$$PW_{N-1} = Hash\{D_N + Hash[D_{N-1} + PW_{N-2}]\},$$

où $D_N$ désigne les données (228) stockées du dernier bloc (110), $D_{N-1}$ désigne les données stockées de l'avant-dernier bloc (112) et $PW_{N-2}$ désigne une valeur de contrôle de l'avant-dernier bloc (112).

11. Procédé selon l'une des revendications précédentes, dans lequel des blocs successifs de la structure de chaîne de blocs (100, 312) concaténée de manière bidirectionnelle sont respectivement concaténés entre eux de manière bidirectionnelle, où respectivement le premier bloc de deux blocs se succédant l'un à l'autre comprend une valeur de contrôle du bloc précédent, laquelle a été calculée moyennant l'emploi de données du bloc précédent et de données du bloc suivant, et le bloc suivant parmi les blocs se succédant l'un à l'autre comprend une valeur de contrôle du bloc suivant, laquelle a été calculée moyennant l'emploi de données du bloc précédent et de données du bloc suivant.

12. Procédé selon l'une des revendications précédentes, dans lequel les données (310, 248) devant être stockées comprennent des données, lesquelles sont caractéristiques pour le contenu d'un document codé numériquement, où la préparation des données (310, 248) devant être stockées comprend une réception des données au moyen d'une interface de communication (314) par le biais d'un réseau (340) d'un système informatique (350) établissant le document codé numériquement, le procédé comprenant en outre :

   • la réception d'une demande d'une version actualisée de la structure de chaîne de blocs (100, 312) au moyen de l'interface de communication (314) par le biais du réseau (340) à partir d'un système informatique (320) demandeur,
   • l'envoi de la structure de chaîne de blocs (100, 312) élargie au système informatique (320) demandeur au moyen de l'interface de communication (314) par le biais du réseau (340), en réponse à la demande reçue, ou

dans lequel les données (310, 248) devant être stockées comprennent des données d'une transaction, dans lequel

EP 3 602 385 B1

la préparation des données (310, 248) devant être stockées comprend une réception des données au moyen d'une interface de communication (314) par le biais d'un réseau (340) d'un système informatique (350) impliqué dans l'exécution de la transaction, le procédé comprenant en outre :

- la réception d'une demande d'une version actualisée de la structure de chaîne de blocs (100, 312) au moyen de l'interface de communication (314) par le biais du réseau (340) par un système informatique (320) demandeur,
- l'envoi de la structure de chaîne de blocs (100, 312) élargie au système informatique (320) demandeur au moyen de l'interface de communication (314) par le biais du réseau (340), en réponse à la demande reçue, ou

dans lequel les données (310, 248) devant être stockées comprennent des données d'état d'un dispositif, dans lequel la préparation des données devant être stockées comprend une réception des données (310, 248) au moyen d'une interface de communication (314) par le biais d'un réseau (340) par un système informatique (350) saisissant les données d'état au moyen d'un capteur (366), le procédé comprenant en outre :

- la réception d'une demande d'une version actualisée de la structure de chaîne de blocs (100, 312) au moyen de l'interface de communication (314) par le biais du réseau (340) par un système informatique (320) demandeur,
- l'envoi de la structure de chaîne de blocs (100, 312) élargie au système informatique (320) demandeur au moyen de l'interface de communication (314) par le biais du réseau (340), en réponse à la demande reçue.

13. Procédé selon l'une des revendications 1 à 11, dans lequel les données (310, 248) devant être stockées comprennent des données, lesquelles caractérisent un processus de production d'un document codé numériquement, dans lequel la préparation de la structure de chaîne de blocs (100, 312) comprend une réception du document devant être produit, lequel comprend la structure de chaîne de blocs (100, 312), et une lecture de la structure de chaîne de blocs (100, 312) à partir du document réceptionné, dans lequel la préparation des données (310, 248) devant être stockées comprend une production du document réceptionné et une création des données, dans lequel le stockage de la structure de chaîne de blocs (100, 312) élargie comprend un ajout de la structure de chaîne de blocs (100, 312) élargie au document devant être produit et un stockage du document devant être produit avec la structure de chaine de blocs (100, 312) élargie,
le procédé, de préférence, comprenant en outre :

- la réception d'une demande du document devant être produit au moyen d'une l'interface de communication (314) par le biais d'un réseau (340) par un système informatique (320) demandeur,
- l'envoi du document devant être produit avec la structure de chaine de blocs (100, 312) élargie au système informatique (320) demandeur au moyen de l'interface de communication (314) par le biais du réseau (340), en réponse à la demande reçue.

14. Système de stockage de données (300) électronique permettant le stockage sécurisé contre des manipulations de données (310, 248) dans une structure de chaîne de blocs (100, 312) concaténée de manière bidirectionnelle, laquelle comprend au moins un premier et un dernier bloc, où le système de stockage de données (300) comprend un processeur (302) et une mémoire électronique (306) avec des instructions (304) lisibles par machine, dans lequel une exécution des instructions (304) lisibles par machine par le processeur (302) fait en sorte que le système de stockage de données (300) exécute le procédé selon la revendication 1.

15. Système de télécommunication, lequel comprend un système de stockage de données (300) électronique selon la revendication 14 et une interface de communication (314) pour la communication par le biais d'un réseau (340), dans lequel la préparation des données (310, 248) devant être stockées comprend une réception des données au moyen d'une interface de communication (314) par le biais d'un réseau (340), où le système de télécommunication comprend en outre des moyens pour l'exécution :

- de la réception d'une demande d'une version actualisée de la structure de chaîne de blocs (100, 312) au moyen de l'interface de communication (314) par le biais du réseau (340) par un système de télécommunication (320) demandeur,
- l'envoi de la structure de chaîne de blocs (100, 312) élargie au système de télécommunication (320) demandeur au moyen de l'interface de communication (314) par le biais du réseau (340), en réponse à la demande reçue, ou

dans lequel les données (310, 248) devant être stockées comprennent des données, lesquelles caractérisent un processus de production d'un document codé numériquement, dans lequel la préparation de la structure de chaîne de blocs (100, 312) comprend une réception du document devant être produit, lequel comprend la structure de

30

chaîne de blocs (100, 312), et une lecture de la structure de chaîne de blocs (100, 312) à partir du document réceptionné, dans lequel la préparation des données (100, 248) devant être stockées comprend une production du document réceptionné et une création des données, dans lequel le stockage de la structure de chaîne de blocs (100, 312) élargie comprend un ajout de la structure de chaîne de blocs (100, 312) élargie au document devant être produit et un stockage du document devant être produit avec la structure de chaine de blocs (100, 312) élargie, le système de télécommunication comprenant en outre des moyens pour l'exécution :

> • de la réception d'une demande pour le document devant être produit au moyen de l'interface de communication (314) par le biais du réseau (340) par un système de télécommunication (320) demandeur,
> • l'envoi du document devant être produit avec la structure de chaine de blocs (100, 312) élargie au système de télécommunication (320) demandeur au moyen de l'interface de communication (314) par le biais du réseau (340), en réponse à la demande reçue.

100

Fig. 1

Fig. 2A

Fig. 2B

110

Block $B_N$ — 222

Prüfwert $PW_{N-1}$ — 223

Platzhalter $PH_N$ — 226

Kombinierter Prüfwert $KPW_N$ — 228

Daten $D_N$

Fig. 3A

M-te Spalte     110

228

Daten $D_N$ [(M-1)x(M-1)]-Matrix | $PH_N$ — 223

M-te Zeile →    $PW_{N-1}$ | $KPW_N$ — 226

222

Block N (MxM)-Matrix

Fig. 3B

Block B_N — 110

Prüfwert PW_{N-1} — 222

Prüfwert PW_N — 224

Kombinierter Prüfwert KPW_N — 226

Daten D_N — 228

## Fig. 4A

M-te Spalte — 110

228

Daten D_N [(M-1)x(M-1)]-Matrix — PW_N — 224

M-te Zeile → PW_{N-1} — KPW_N — 226

222

**Block N**
**(MxM)-Matrix**

## Fig. 4B

Block $B_{N+1}$ — 112

Prüfwert $PW_N$ — 224

Platzhalter $PH_{N+1}$ — 243

Kombinierter Prüfwert $KPW_{N+1}$ — 246

Daten $D_{N+1}$ — 248

Fig. 5A

M-te Spalte — 112

248

Daten $D_{N+1}$ [(M-1)x(M-1)]-Matrix

$PH_{N+1}$ — 243

M-te Zeile

$PW_N$   $KPW_{N+1}$ — 246

224

Block N+1 (MxM)-Matrix

Fig. 5B

| Bereitstellen Blockchain-Struktur | 400 |

↓

| Bereitstellen zu speichernde Daten | 402 |

↓

| Erzeugen zusätzlicher Block | 404 |

↓

| Berechnen Prüfwert | 406 |

↓

| Hinzufügen Prüfwert zu letztem Block | 408 |

↓

| Hinzufügen Prüfwert zu zusätzlichem Block | 410 |

↓

| Berechnen/Aktualisieren kombinierter Prüfwert letzter Block | 412 |

↓

| Berechnen kombinierter Prüfwert zusätzlicher Block | 414 |

↓

| Hinzufügen kombinierter Prüfwert zu zusätzlichem Block | 416 |

Fig. 6

| Bereitstellen Blockchain-Struktur | 500 |
|---|---|

| Bereitstellen zu speichernde Daten | 502 |
|---|---|

| Erzeugen zusätzlicher Block | 504 |
|---|---|

| Berechnen Prüfwerte | 506 |
|---|---|

| Hinzufügen Prüfwert zu letztem Block | 508 |
|---|---|

| Hinzufügen Prüfwert zu zusätzlichem Block | 510 |
|---|---|

| Berechnen/Aktualisieren kombinierter Prüfwert letzter Block | 512 |
|---|---|

| Berechnen kombinierter Prüfwert zusätzlicher Block | 514 |
|---|---|

| Hinzufügen kombinierter Prüfwert zu zusätzlichem Block | 516 |
|---|---|

Fig. 7

102

Block B₁ —— 201

Platzhalter PH₁ —— 204

Prüfwert PW1₁ —— 206

Kombinierter
Prüfwert KPW₁ —— 208

Daten D₁

## Fig. 8A

M-te Spalte —— 102

208

Daten D₁
[(M-1)x(M-1)]-Matrix

PW1₁ —— 204

M-te Zeile ⟶

PH₁ | KPW₁ —— 206

201

Block 1
(MxM)-Matrix

## Fig. 8B

110

Block B$_N$ — 222

Prüfwert PW2$_{N-1}$ — 223

Platzhalter PH$_N$ — 226

Kombinierter Prüfwert KPW$_N$ — 228

Daten D$_N$

## Fig. 9A

M-te Spalte — 110

228

Daten D$_N$ [(M-1)x(M-1)]-Matrix — PH$_N$ — 223

M-te Zeile → PW2$_{N-1}$ — KPW$_N$ — 226

222

Block N (MxM)-Matrix

## Fig. 9B

110

Block B_N — 221

Platzhalter PW2_{N-1} — 224

Prüfwert PW1_N — 226

Kombinierter
Prüfwert KPW_N — 228

Daten D_N

Fig. 10A

M-te Spalte — 110

228

Daten D_N
[(M-1)x(M-1)]-Matrix | PW1_N — 224

M-te Zeile → PW2_{N-1} | KPW_N — 226

221

Block N
(MxM)-Matrix

Fig. 10B

Block B$_{N+1}$ — 112

Prüfwert PW2$_N$ — 242

Platzhalter PH$_{N+1}$ — 243

Kombinierter
Prüfwert KPW$_{N+1}$ — 246

Daten D$_{N+1}$ — 248

## Fig. 11A

M-te Spalte — 112

248

Daten D$_{N+1}$
[(M-1)x(M-1)]-Matrix | PH$_{N+1}$ — 243

— 246

M-te Zeile → | PW2$_N$ | KPW$_{N+1}$

242

Block N+1
(MxM)-Matrix

## Fig. 11B

| Computersystem | 300 |
| --- | --- |
| Prozessor | 302 |
| Instruktionen | 304 |
| | 306 |
| Speicher | 308 |
| Hashfunktion | |
| Daten | 310 |
| Blockchain-Struktur | 312 |
| Schnittstelle | 314 |

Fig. 12

Fig. 13

**IN DER BESCHREIBUNG AUFGEFÜHRTE DOKUMENTE**

**In der Beschreibung aufgeführte Patentdokumente**

- WO 2016161073 A1

- US 2016261690 A1

**In der Beschreibung aufgeführte Nicht-Patentliteratur**

- **JUAN GRARAY et al.** The Bitcoin Backbone Protocol: Analysis and Applications. *Advances in Cryptology - EUROCRYPT 2015,* 26. April 2015

- Mastering Bitcoin. The Blockchain. 161 ff